(19) Europäisches Patentamt
European Patent Office
Office européen des brevets

(11) **EP 2 340 988 A2**

(12) **EUROPEAN PATENT APPLICATION**

(43) Date of publication:
**06.07.2011 Bulletin 2011/27**

(51) Int Cl.:
***B62L 3/02*** *(2006.01)*

(21) Application number: **10015673.6**

(22) Date of filing: **15.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.12.2009 JP 2009298999**
**17.02.2010 JP 2010032547**

(71) Applicant: **MAX CO., LTD.**
**Tokyo 103-8502 (JP)**

(72) Inventors:
• **Tanaka, Hiroshi**
**Tokyo 103-8502 (JP)**
• **Kanai, Toshiyuki**
**Tokyo 103-8502 (JP)**
• **Aihara, Yasunori**
**Tokyo 103-8502 (JP)**
• **Igarashi, Hitoshi**
**Tokyo 103-8502 (JP)**

(74) Representative: **Samson & Partner**
**Widenmayerstrasse 5**
**80538 München (DE)**

(54) **Operating mechanism and assistive equipment**

(57)    An operating mechanism is provided with an operating member (102A) which is pivotally supported by a first axis (121A), and a link member (103A) which is pivotally supported by a second axis (132A) and configured to transmit an operation of the operating member (102A) to a driving force transmitting member (111). A necessary load for an operation of the operating member (102A) is relieved at a ratio of distances between power working points and effort points, and support points in the operating member (102A) and the link member (103A).

*FIG.1*

## Description

## BACKGROUND OF THE INVENTION

<FIELD OF THE INVENTION>

The present invention relates to an operating mechanism to be operated by an operator and an assistive equipment including the operating mechanism.

<RELATED ART>

As an example of a mechanism for operating an operating target by a hand of an operator, there is known a hand braking structure of a bicycle. In the hand braking structure of the bicycle, when the operator operates an operating lever by a finger to rotate the operating lever, a wire is pulled.

The hand braking structure of the bicycle is generally intended for an operation to regulate a speed. In other words, in the hand braking structure of the bicycle, it is important that the structure can finely regulate the speed according to an operator's intension. There is proposed a hand braking structure which increases an amount of an actuation in a stage for starting to pull the operating lever and decreases the amount of the actuation in a stage for causing a brake shoe to collide with a rim, thereby enabling a fine control.

For instance, there is proposed a structure in which an engaging portion of a wire formed in a shape of a slot to cause a distance from a support point of an operating lever to a wire engaging portion to be variable, resulting in a variable lever ratio at a start for pulling the operating lever and in a middle thereof (for instance, see JP-A-03-292280). Moreover, there is proposed a structure including a mechanism for moving a position of a wire engaging portion in accordance with a pivotal movement of an operating lever (for instance, see US5279179).

On the other hand, some assistive equipments such as a wheelchair include an operating mechanism which is similar to a hand braking structure of a bicycle. In some cases in which the hand braking structure of the bicycle is applied to the assistive equipment, an operating load imposes a burden on the operator in a conventional operating lever. For instance, in a wheelchair for a nursing care, the operating lever is used for an operation for actuating a stopping brake or a reclining mechanism. However, an operating load is great so that an operability is demanded to be improved. Moreover, the operating load is demanded to be relieved also in an operating lever for a different use from a general bicycle, for instance, a bicycle having a safety wheel for the elderly or a bicycle for three people together with an infant in addition to the wheelchair.

In the hand braking structure described in the JP-A-03-292280, the operating load is variable and is increased to obtain a large amount of an actuation at a start for pulling the operating lever. For this reason, the hand braking structure is not a sufficient mechanism for relieving an operating load for people who have a small grasping power, for instance, the elderly.

Further, in an operating mechanism applied to a wheelchair, moreover, there is proposed a brake lever which can lock a brake in a braking state.

For instance, US5279180 discloses an apparatus capable of holding a position of a brake lever in a predetermined position and locking a brake in a braking state by pushing the brake lever in a reverse direction to that in a normal braking operation. Moreover, JP-A-09-267731 discloses a brake lever in which an amount of an actuation of a brake lever in an operation for locking a brake in a braking state is increased.

In the operating mechanism described in the US5279180, the brake can be locked into the braking state in a small amount of an actuation of the brake lever. However, an operating load is great and unlocking can also be carried out in a small amount of the actuation of the brake lever. For this reason, unintended unlocking is carried out in some cases. Therefore, it is impossible to cause an easiness of an operation and a safety to be compatible with each other.

In the operating mechanism described in the JP-A-09-267731, moreover, it is possible to prevent the unintended unlocking. However, the operating load is great in the brake lever having a large amount of an actuation. For this reason, it is hard for people having a small power to reliably carry out an operation. Consequently, it is impossible to ensure an easiness of an operation. In a wheelchair for a nursing care, the operating load is particularly demanded to be relieved. Furthermore, the operating load is demanded to be relieved also in an operating lever in a different use from a general bicycle, for instance, a bicycle having a safety wheel for the elderly or a bicycle for three people together with an infant in addition to a wheelchair.

## SUMMARY OF THE INVENTION

One or more embodiments of the invention provide an operating mechanism and an assistive equipment in which an operating load is relieved.

In accordance with one or more embodiments of the invention, an operating mechanism is provided with an operating member 102A, 102B, 2A or 2B which is pivotally supported by a first axis 121A, 121 B, 23A or 21 B, and a link member 103A, 103B, 103C, 3A or 3B supported pivotally by a second axis 132A, 132B, 32A or 32B which is different from the first axis 121A, 121 B, 23A or 21 B and serving to transmit an operation of the operating member 102A, 102B, 2A or 2B to a driving force transmitting member 111 or 11.

Further, in accordance with one or more embodiments of the invention, an assistive equipment is provided with an operating mechanism having operating force relieving means for relieving an operating force of an operating target.

## BRIEF DESCRIPTION OF THE DRAWINGS

Fig. 1 is a view showing a structure according to an example of an operating mechanism in accordance with a first exemplary embodiment,
Fig. 2(a) and Fig. 2(b) are explanatory views showing an operation, illustrating an example of an operation of the operating mechanism according to the first exemplary embodiment,
Fig. 3 is a view showing a structure according to an example of an operating mechanism in accordance with a second exemplary embodiment,
Fig. 4(a) and Fig. 4(b) are explanatory views showing an operation, illustrating an example of an operation of the operating mechanism according to the second exemplary embodiment,
Fig. 5(a) and Fig. 5(b) are explanatory views showing an operation, illustrating an example of a structure and operation of an operating mechanism according to a third exemplary embodiment,
Fig. 6 is a view showing a structure according to an example of an operating mechanism in accordance with a fourth exemplary embodiment,
Fig. 7 is a view showing a structure according to an example of an operating lever in the operating mechanism in accordance with the fourth exemplary embodiment,
Fig. 8 is an explanatory view showing an operation, illustrating an example of an operation of the operating mechanism according to the fourth exemplary embodiment,
Fig. 9 is an explanatory view showing an operation, illustrating an example of the operation of the operating mechanism according to the fourth exemplary embodiment,
Fig. 10 is an explanatory view showing an operation, illustrating an example of the operation of the operating mechanism according to the fourth exemplary embodiment,
Fig. 11 is an explanatory view showing the operation, illustrating an example of the operation of the operating mechanism according to the fourth exemplary embodiment,
Fig. 12 is an explanatory view showing an operation, illustrating an example of an effect of the operating mechanism according to the fourth exemplary embodiment,
Fig. 13(a) and Fig. 13(b) are views showing a structure according to an example of an operating mechanism in accordance with a fifth exemplary embodiment,
Fig. 14 is an explanatory view showing an operation, illustrating an example of an operation of the operating mechanism according to the fifth exemplary embodiment,
Fig. 15 is an explanatory view showing the operation, illustrating an example of the operation of the operating mechanism according to the fifth exemplary embodiment, and
Fig. 16 is a view showing a structure according to an example of a wheelchair serving as an assistive equipment.

## DETAILED DESCRIPTION OF THE EXEMPLARY EMBODIMENTS

With reference to the drawings, exemplary embodiments of the invention will be described below.

<Structure of Operating Mechanism according to First Exemplary embodiment>

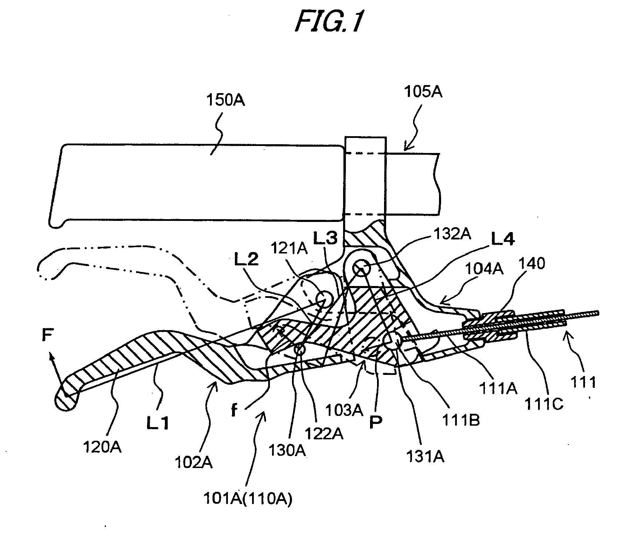

Fig. 1 is a view showing a structure of an operating mechanism according to a first exemplary embodiment. An operating mechanism 101A according to the first exemplary embodiment is applied to a human operating mechanism. By including a mechanism for reducing an operating load, it is possible to relieve a burden of an operator. The operating mechanism 101A according to the first exemplary embodiment is applied to a mechanism to be operated by a human hand in an assistive equipment such as a wheelchair. In the example, there will be described an example in which the operating mechanism 101A is applied to a brake lever 110A for operating a brake of a wheelchair.

The operating mechanism 101A according to the first exemplary embodiment includes an operating lever 102A to be operated by an operator, a link member 103A for transmitting the operation of the operating lever 102A to an operating wire 111 serving as a driving force transmitting member for actuating a brake to be an operating target, and a bracket 104A to which the operating lever 102A and the link member 103A are to be attached. Operating force relieving means is implemented at a ratio of distances between power working points and effort points, and support points in the operating lever 102A and the link member 103A.

The operating lever 102A is an example of an operating member, and one of end sides of an operating portion 120A to be operated by a finger of a hand of the operator is pivotally supported by the bracket 104A through a first axis 121A, for instance. The operating lever 102A pivots around the first axis 121A by a force received through the operating portion 120A with the other end side of the operating portion 120A set to be the effort point.

The operating lever 102A includes a working pin 122A between the operating portion 120A and the first axis 121A. The working pin 122A is displaced with a pivotal movement of the operating lever 102A around the first axis 121A, and serves as a working point for causing a force received by the operating portion 120A to act on the link member 103A.

The operating lever 102A has such a structure that a length L2 from the working pin 122A serving as the working point to the first axis 121A is smaller than a length L1 from an operating point of the operating portion 120A serving as the effort point to the first axis 121A serving as the support point.

The link member 103A includes a pressing surface 130A with which the working pin 122A of the operating lever 102A comes in contact, and a wire engaging portion 131A to which an inner wire 111A of the operating wire 111 is to be attached, and is pivotally supported by the bracket 104A through a second axis 132A.

The pressing surface 130A is pressed against the working pin 122A of the operating lever 102A and thus receives a force, and furthermore, is constituted by a plane or a curved surface along which the working pin 122A coming in contact therewith can smoothly slide. The link member 103A pivots around the second axis 132A upon receipt of a force from the working pin 122A displaced with a pivotal movement of the operating lever 102A around the first axis 121A with a contact part of the pressing surface 130A and the working pin 122A of the operating lever 102A set to be an effort point. An engagement of the operating lever 102A and the link member 103A may imply an engagement of a convex member provided on one of sides and a hole portion provided on the other side, for instance, an insertion of a pin into a slot.

The wire engaging portion 131A is constituted to take such a cylindrical shape that a cylindrical engaging portion 111 B formed on an end of the inner wire 111A is fitted therein removably and rotatably, and pulls the inner wire 111A through a pivotal movement of the link member 103A around the second axis 132A.

The link member 103A has a structure in which the wire engaging portion 131A serves as a working point and a length L3 from the pressing surface 130A serving as an effort point to the second axis 132A serving as a support point is almost equal to a length L4 from the wire engaging portion 131A to the second axis 132A or L3 is greater than L4.

The bracket 104A is an example of a fixing member and is attached to a handle portion 105A to be held by a hand of an operator. A grip 150A to be held by a hand is attached to the handle portion 105A. The bracket 104A is attached to the handle portion 105A on one of end sides of the grip 150A.

In the bracket 104A, the first axis 121A and the second axis 132A are formed in such a manner that the operating lever 102A is disposed on the grip 150A side and the link member 103A is disposed on an inside at one of the end sides of the operating lever 102A. The bracket 104A can have such a structure that the first axis 121A and the second axis 132A are formed to support the operating lever 102A and the link member 103A by means of a single member.

Consequently, the support points and the power working points and effort points in the operating lever 102A and the link member 103A are provided from the second axis 132A toward the operating portion 120A serving as an operating point of the operating lever 102A in order of the second axis 132A serving as the support point of the link member 103A, the first axis 121A serving as the support point of the operating lever 102A, and a contact part of the pressing surface 130A of the link member 103A serving as a working point of the operating lever 102A and an effort point of the link member 103A and the working pin 122A of the operating lever 102A.

The bracket 104A includes an adjuster 140 for supporting an outer wire 111 C of the operating wire 111 through which the inner wire 111A is to be inserted. The adjuster 140 can regulate a braking margin through an adjustment of an amount of a protrusion from the bracket 104A.

<Operation of Operating Mechanism according to First Exemplary embodiment>

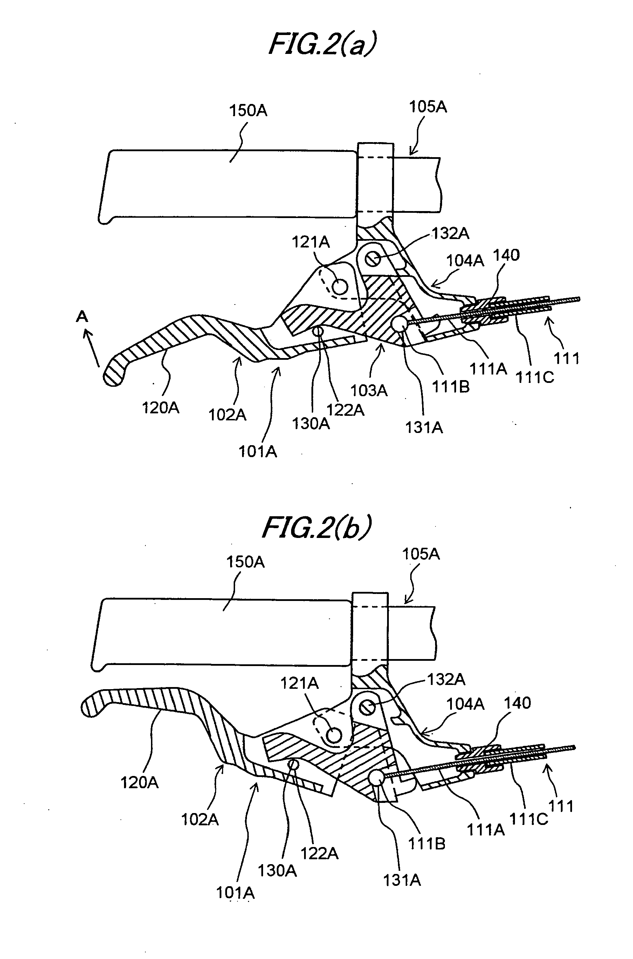

Figs. 2(a) and 2(b) are explanatory views showing an operation, illustrating an example of the operation of the operating mechanism according to the first exemplary embodiment. In the operating mechanism 101A according to the first exemplary embodiment, the operating lever 102A pivots around the first axis 121A when the operating lever 102A in an opening state as shown in Fig. 2(a) is gripped by a hand holding the grip 150A of the handle portion 105A, and is thus pulled in a direction of an arrow "A".

The link member 103A pivots around the second axis 132A upon receipt of a force from the working pin 122A displaced with the pivotal movement of the operating lever 102A around the first axis 121A through the pressing surface 130A.

When the link member 103A pivots, the inner wire 111A attached to the wire engaging portion 131A is pulled. By carrying out an operation to close the operating lever 102A as shown in Fig. 2(b), it is possible to pull the inner wire 111A, thereby actuating the brake.

A load F applied to the operating lever 102A acts at a ratio of distances between power working points and effort points, and support points in the operating lever 102A and the link member 103A. In the operating lever 102A, a length from the operating point of the operating portion 120A serving as the effort point to the first axis 121A serving as the support point is represented by L1, and a length from the working pin 122A serving as a working point to the first axis 121A is represented by L2. In the link member 103A, a length from the pressing surface 130A serving as an effort point to the second axis 132A serving as the support point is represented by L3, and a length from the wire engaging portion 131A serving as a working point to the second axis 132A is represented by L4.

A load applied from the inner wire 111A to the wire engaging portion 131A of the link member 103A by a force of a spring for restoring a brake to be an operating target is represented by P. Moreover, a load applied to a contact part of the pressing surface 130A of the link member 103A serving as a working point of the operating lever 102A and an effort point of the link member 103A and the working pin 122A of the operating lever 102A is represented by f.

The load F applied to the operating portion 120A of the operating lever 102A is calculated in accordance with the following Equation (1), and the load f applied to the pressing surface 130A of the link member 103A is calculated in accordance with the following Equation (2). By substituting the Equation (2) for the Equation (1), it is possible to obtain, in accordance with Equation (3), a relationship between the load F applied to the operating portion 120A of the operating lever 102A and the load P applied from the inner wire 111A to the wire engaging portion 131A of the link member 103A.

$$F = \frac{f \cdot L2}{L1} \quad \ldots (1)$$

$$f = \frac{P \cdot L4}{L3} \quad \ldots (2)$$

$$F = \frac{\dfrac{P \cdot L4}{L3} \cdot L2}{L1} \quad \ldots (3)$$

As shown in the Equation (3), it is possible to reduce the load F applied to the operating portion 120A of the operating lever 102A when L1 and L3 are great, L2 and L4 are small, L1 is greater than L2, and L3 is greater than L4. Moreover, it is possible to reduce the load F when L2 is smaller than L3.

By providing the support points and the power working points and effort points in the operating lever 102A and the link member 103A from the second axis 132A toward the operating portion 120A serving as the operating point of the operating lever 102A in order of the second axis 132A of the link member 103A, the first axis 121A of the operating lever 102A, and the contact part of the pressing surface 130A of the link member 103A and the working pin 122A of the operating lever 102A, it is possible to satisfy a condition for reducing the load in accordance with the Equation (3) without increasing a size of the mechanism. The load F is started to be reduced in a gripping start state in which the operating lever 102A is opened as shown in Fig. 2(a). It is possible to continuously reduce the load F until the operating lever 102A is closed as shown in Fig. 2(b).

In the operating lever 102A and the link member 103A, positions of axes serving as support points of pivotal movements are different from each other. A locus of the engaging pin 122A through the pivotal movement of the operating lever 102A around the first axis 121A is different from that of the pressing surface 130A through the pivotal movement of the link member 103A around the second axis 132A.

For this reason, it is necessary to employ a structure in which one of the engaging pin 122A and the pressing surface 130A is displaced to follow the other locus. There is employed a structure in which the engaging pin 122A slides along the pressing surface 130A through the pivotal movements of the operating lever 102A and the link member 103A. In the operating mechanism 101A, the engaging pin 122A is fixed to the operating lever 102A. In the operating lever 102A, therefore, the length L2 from the engaging pin 122A serving as the working point on the link member 103A to the first axis 121A serving as the support point is constant. When the engaging pin 122A slides along the pressing surface 130A, accordingly, the length L3 from the pressing surface 130A serving as the effort point to the second axis 132A serving as the support point is varied in the link member 103A.

It is apparent that the load F is increased in accordance with the Equation (3) when the length L is varied in a decreasing direction. In order to vary the length L3 in an increasing direction and to decrease a variation through the pivotal movements of the operating lever 102A and the link member 103A, therefore, the engaging pin 122A and the pressing surface 130A are caused to come in contact with each other within such a range that the locus of the pressing surface 130A is provided along that of the engaging pin 122A. For this reason, a position of each axis, a position of the engaging pin 122A and a position and shape of the pressing surface 130A are determined in such a manner that the engaging pin 122A and the pressing surface 130A come in contact with each other within a predetermined range in the vicinity of a straight line connecting the first axis 121A and the second axis 132A.

In the operating mechanism 101A according to the first exemplary embodiment, it is also possible to constitute, by independent components, a bracket to which the operating lever 102A is to be attached and a bracket to which the link member 103A is to be attached. By employing the structure in which the operating lever 102A and the link member 103A are supported by the independent brackets, it is possible to adjust an attaching position of the bracket, thereby varying a ratio of distances between the power working points and effort points and the support points in the operating lever 102A and the link member 103A. Thus, it is possible to regulate a load.

<Structure of Operating Mechanism according to Second Exemplary embodiment>

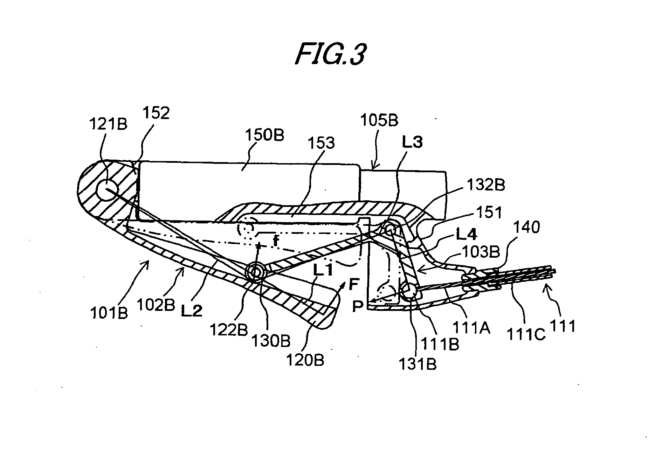

Fig. 3 is a view showing a structure according to an example of an operating mechanism in accordance with a second exemplary embodiment. In the operating mechanism 101A according to the first exemplary embodiment, the effort point of the operating lever 102A is placed on a little finger side of a human hand. On the other hand, an operating mechanism 101 B according to the second exemplary embodiment places an effort point of an operating lever on an index finger side, thereby relieving a burden of an operator and easily operating the operating lever.

The operating mechanism 101B according to the second exemplary embodiment includes an operating lever 102B to be operated by an operator, a link member 103B for transmitting an operation of the operating lever 102B to an operating wire 111, and a handle portion 105B to which the operating lever 102B and the link member 103B are to be attached. A grip 150B to be held by a hand is attached to the handle portion 105B, the link member 103B is attached to the handle portion 105B at one of end sides of the grip 150B to be an index finger side of the hand holding the grip 150B, and the operating lever 102B is attached to the handle portion 105B at the other end side to be a little finger side.

The operating lever 102B is an example of an operating member, and an operating portion 120B to be operated by a finger of a hand of the operator is formed on one of end sides and the other end side is pivotally supported by the handle portion 105B through a first axis 121 B. The operating lever 102B pivots around the first axis 121 B by a force received through the operating portion 120B with one of end sides of the operating portion 120B set to be an effort point.

The operating lever 102B includes a pressing surface 122B on an inside of the operating portion 120B. The pressing surface 122B is displaced with a pivotal movement of the operating lever 102B around the first axis 121 B, and serves as a working point for causing a force received by the operating portion 120B to act on the link member 103B.

The link member 103B includes a pressing roller 130B to come in contact with the pressing surface 122B of the operating lever 102B, and a wire engaging portion 131B to which an inner wire 111A of the operating wire 111 is to be attached, and is pivotally supported by the handle portion 105B through a second axis 132B.

The pressing roller 130B is pressed against the pressing surface 122B of the operating lever 102B, thereby receiving a force. The operating lever 102B is constituted by a plane or a curved surface along which the pressing roller 130B coming in contact can slide with a contact part of the pressing surface 122B and the pressing roller 130B of the link member 103B set to be a working point. The link member 103B pivots around the second axis 132B upon receipt of a force from the pressing surface 122B displaced with a pivotal movement of the operating lever 102B around the first axis 121 B with the contact part of the pressing roller 130B and the pressing surface 122B of the operating lever 102B serving as an effort point.

The wire engaging portion 131 B is constituted to take such a cylindrical shape that a cylindrical engaging portion 111B formed on an end of the inner wire 111A is fitted therein removably and rotatably, and pulls the inner wire 111A through a pivotal movement of the link member 103B around the second axis 1328.

The operating lever 102B has such a structure that a length L2 from an operating point of the operating portion 120B serving as an effort point to the contact part of the pressing surface 122B serving as a working point and the pressing roller 130B of the link member 103B is smaller than a length L1 from the same operating point to the first axis 121 B serving as a support point.

The link member 103B has a structure in which the wire engaging portion 131 B serves as a working point and a length L3 from the contact part of the pressing roller 130B serving as an effort point and the pressing surface 122B of the operating lever 102B to the second axis 132B serving as a support point is almost equal to a length L4 from the wire engaging portion 131B to the second axis 132B or L3 is greater than L4.

The handle portion 105B is an example of a fixing member, and a bracket 151 to which the second axis 132B of the link member 103B is to be attached is formed integrally at one of end sides of the grip 150B. In the handle portion 105B, moreover, a bracket 152 to which the first axis 121B of the operating lever 102B is to be attached is formed integrally at the other end side of the grip 150B. The handle portion 105B has a groove portion 153 formed in a part of the grip 150B opposed to the pressing surface 122B of the operating lever 102B and the link member 103B. The groove portion 153 accommodates the link member 103B therein. Each bracket may be constituted by a component which is independent of the handle portion 105B.

Consequently, support points, and power working points and effort points in the operating lever 102B and the link member 103B are provided in order of the second axis 132B serving as a support point of the link member 103B, the contact part of the pressing surface 122B of the operating lever 102B serving as a working point of the operating lever 102B and an effort point of the link member 103B and the pressing roller 130B of the link member 103B, and the first axis 121B serving as a support point of the operating lever 102B.

The bracket 151 includes an adjuster 140 for supporting an outer wire 111C of the operating wire 111 through which the inner wire 111A is to be inserted. The adjuster 140 can regulate a braking margin through an adjustment of an amount of a protrusion from the bracket 151.

<Operation of Operating Mechanism according to Second Exemplary embodiment>

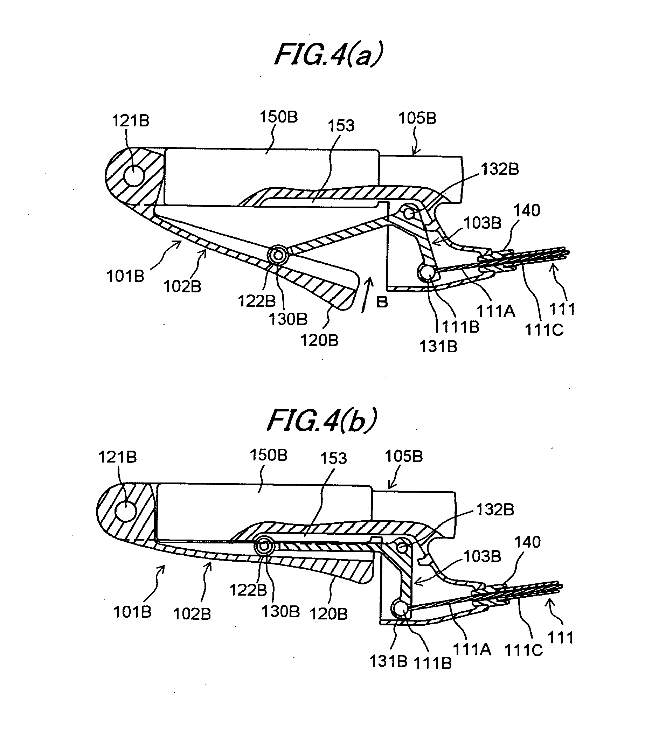

Figs. 4(a) and 4(b) are explanatory views showing an operation, illustrating an example of the operation of the operating mechanism according to the second exemplary embodiment. In the operating mechanism 101B according to the second exemplary embodiment, the operating lever 102B pivots around the first axis 121B when the operating lever 102B in an opening state as shown in Fig. 4(a) is gripped by a hand holding the grip 150B of the handle portion 105B, and is thus pulled in a direction of an arrow "B".

The link member 103B pivots around the second axis 132B upon receipt of a force from the pressing surface 122B displaced with the pivotal movement of the operating lever 102B around the first axis 121 B through the pressing roller 130B. When the operating lever 102B pivots, moreover, the contact part of the pressing surface 122B of the operating lever 102B serving as the working point of the operating lever 102B and the pressing roller 130B of the link member 103B moves in such a direction as to approach the first axis 121B.

When the link member 103B pivots, the inner wire 111A attached to the wire engaging portion 131B is pulled. By carrying out an operation to close the operating lever 102B as shown in Fig. 4(b), it is possible to pull the inner wire 111A, thereby actuating the brake. As shown in Fig. 4(b), when the operating lever 102B is caused to pivot in a closing direction, it is possible to ensure more strokes of the operating lever 102B by enabling an accommodation of the link member 103B in the groove portion 153 provided in the grip 150B.

A load F applied to the operating lever 102B acts at a ratio of distances between power working points and effort points, and support points in the operating lever 102B and the link member 103B. A relationship between the load F applied to the operating portion 120B of the operating lever 102B and a load P applied from the inner wire 111A to the wire engaging portion 131 B of the link member 103B is calculated in accordance with the Equation (3) in the same manner as in the operating mechanism 101A according to the first exemplary embodiment.

Also in the operating mechanism 101B according to the second exemplary embodiment, based on the Equation (3), it is possible to reduce the load F applied to the operating portion 120B of the operating lever 102B when L1 and L3 are great, L2 and L4 are small, L1 is greater than L2, and L3 is greater than L4.

By providing the support points, and the power working points and effort points in the operating lever 102B and the link member 103B in order of the second axis 132B of the link member 103B, the contact part of the pressing surface 122B of the operating lever 102B and the pressing roller 130B of the link member 103B, and the first axis 121 B of the operating lever 102B, it is possible to satisfy a condition for reducing the load in accordance with the Equation (3) without increasing a size of the mechanism.

When the operating lever 102B pivots in a closing direction, moreover, the contact part of the pressing surface 122B of the operating lever 102B and the pressing roller 130B of the link member 103B moves in such a direction as to approach the first axis 121 B. Therefore, the length L2 from the working point of the operating lever 102B to the first axis 121 B is reduced. Consequently, the load F is started to be reduced in a gripping start state in which the operating lever 102B is opened as shown in Fig. 4(a), and the load F can be reduced more greatly when the operating lever 102B is gradually closed as shown in Fig. 4(b). When the effort point of the operating lever 102B is set onto an index finger or middle finger side, furthermore, it is possible to easily carry out the operation of the operating lever, thereby applying a greater force.

In the operating mechanism 101 B according to the second exemplary embodiment, the same functions and effects can be obtained also in a structure in which a power working point from the operating lever 102B to the link member 103B is set to be a rotating support point and the second axis 132B of the link member 103B can rotate and slide with respect to the handle portion 105B.

<Structure and Operation of Operating Mechanism according to Third Exemplary embodiment>

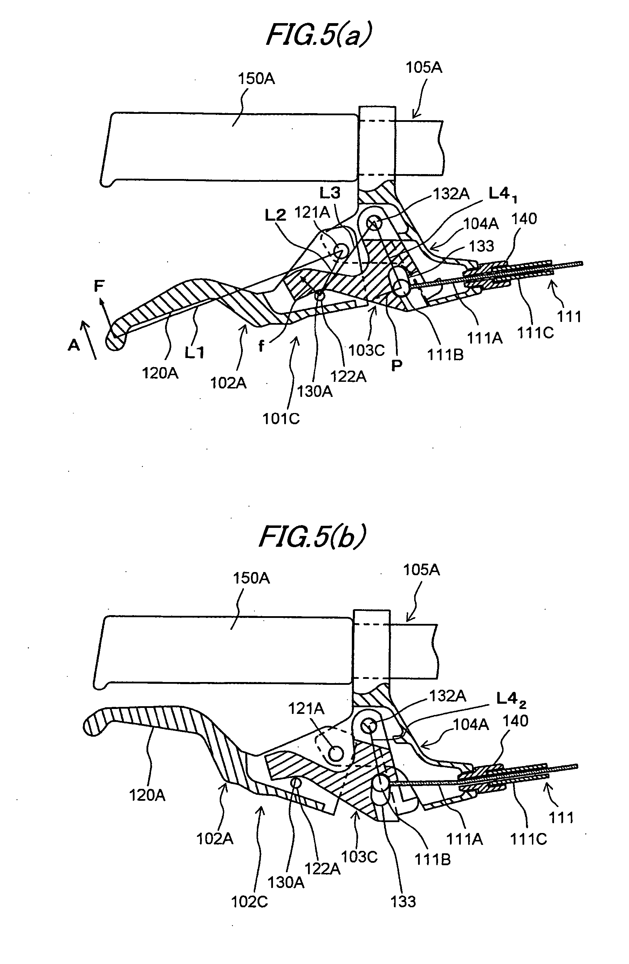

Figs. 5(a) and 5(b) are explanatory views showing an operation, illustrating an example of a structure and operation of an operating mechanism according to a third exemplary embodiment. An operating mechanism 101C according to the third exemplary embodiment includes a mechanism for varying a load depending on an opening of an operating lever in the operating mechanism 101A according to the first exemplary embodiment. In Figs. 5(a) and 5(b), the same components as those in the structures described with reference to Figs. 1, 2(a) and 2(b) have the same reference numerals for explanation.

The operating mechanism 101C according to the third exemplary embodiment includes an operating lever 102A to be operated by an operator, a link member 103C for transmitting an operation of the operating lever 102A to an operating wire 111, and a bracket 104A to which the operating lever 102A and the link member 103C are to be attached.

The operating lever 102A is pivotally supported by the bracket 104A through a first axis 121A and pivots around the first axis 121A by a force received through an operating portion 120A. A working pin 122A provided in the operating lever 102A is displaced with a pivotal movement of the operating lever 102A around the first axis 121A, and serves as a working point for causing the force received by the operating portion 120A to act on the link member 103C.

The link member 103C includes a pressing surface 130A with which the working pin 122A of the operating lever 102A is to come in contact, and a wire engaging portion 133 to which an inner wire 111A of the operating wire 111 is to be attached, and is pivotally supported by the bracket 104A through a second axis 132A.

The link member 103C pivots around the second axis 132A upon receipt of a force from the working pin 122A displaced with a pivotal movement of the operating lever 102A around the first axis 121A with a contact part of the pressing surface 130A and the working pin 122A of the operating lever 102A set to be an effort point.

The wire engaging portion 133 is constituted to take a shape of a slot in which a cylindrical engaging portion 111 B formed on an end of the inner wire 111A is removable and rotatable and is fitted slidably in such a direction as to vary a distance between the engaging portion 111 B of the inner wire 111A and the second axis 132A. The inner wire 111A is pulled through a pivotal movement of the link member 103C around the second axis 132A.

When an orientation in a longitudinal direction of a slot shape is changed with a pivotal movement of the link member 103C through the operation of the operating lever 102A, the wire engaging portion 133 moves a position of the engaging portion 111 B of the inner wire 111A depending on an opening of the operating lever 102A to be operated by an operator. In other words, the wire engaging portion 133 has an angle and shape set in such a manner that the most distant portion from the second axis 132A in the longitudinal direction of the slot shape is turned toward a pull-out side of the inner wire 111A in a state in which the operating lever 102A is opened as shown in Fig. 5(a), and the closest portion in the longitudinal direction of the slot shape is turned toward the pull-out side of the inner wire 111A in a state in which the operating lever 102A is gripped and closed as shown in Fig. 5(b).

Description will be given to the operation of the operating mechanism 101C according to the third exemplary embodiment. As shown in Fig. 5(a), in the state in which the operating lever 102A is opened, the wire engaging portion 133 has the most distant portion from the second axis 132A in the longitudinal direction of the slot shape turned toward the pull-out side of the inner wire 111A. Consequently, a force of a spring for restoring a brake (not shown) to be an operating target is applied to the inner wire 111A. Thus, the engaging portion 111 B of the inner wire 111A is positioned in the most distant portion from the second axis 132A because of the orientation in the longitudinal direction of the wire engaging portion 133, and a length from a working point of the link member 103C to the second axis 132A is represented by $L4_1$.

In the operating mechanism 101C, when the operating lever 102A in the opening state as shown in Fig. 5(a) is gripped by a hand holding a grip 150A of a handle portion 105A so that the operating lever 102A is pulled in a direction of an arrow "A", the operating lever 102A pivots around the first axis 121A.

The link member 103C pivots around the second axis 132A upon receipt of a force from the working pin 122A displaced with the pivotal movement of the operating lever 102A around the first axis 121A through the pressing surface 130A.

When the link member 103C pivots, the inner wire 111A attached to the wire engaging portion 133 is pulled. With the pivotal movement of the link member 103C, moreover, the wire engaging portion 133 changes an orientation in a longitudinal direction of a slot shape. In the wire engaging portion 133 serving as the working point of the link member 103C, consequently, the engaging portion 111B of the inner wire 111A moves in such a direction as to approach the second axis 132A along the slot shape. As shown in Fig. 5(b), thus, it is possible to pull the inner wire 111A, thereby actuating the brake by operating the operating lever 102A to be closed.

A load F applied to the operating lever 102A acts at a ratio of distances between power working points and effort points, and support points in the operating lever 102A and the link member 103C. A relationship between the load F applied to the operating portion 120A of the operating lever 102A and a load P applied from the inner wire 111A to the wire engaging portion 133 of the link member 103C is calculated in accordance with the Equation (3) in the same manner as in the operating mechanism 101A according to the first exemplary embodiment.

Also in the operating mechanism 101C according to the third exemplary embodiment, based on the Equation (3), it is possible to reduce the load F applied to the operating portion 120A of the operating lever 102A when L1 and L3 are great, L2 and L4 are small, L1 is greater than L2, and L3 is greater than L4.

When the link member 103C pivots with the pivotal movement of the operating lever 102A in a closing direction, moreover, the engaging portion 111B of the inner wire 111A moves in such a direction as to approach the second axis 132A in the wire engaging portion 133 serving as the working point of the link member 103C. As shown in Fig. 5(b), in the state in which the operating lever 102A is closed, the wire engaging portion 133 has the closest portion in the longitudinal direction of the slot shape with respect to the second axis 132A which is turned toward the pull-out side of the inner wire 111A. Consequently, a force of a spring for restoring the brake is applied to the inner wire 111A so that the engaging portion 111 B of the inner wire 111A is positioned in the closest portion with respect to the second axis 132A because of the orientation in the longitudinal direction of the wire engaging portion 133, and the length from the working point of the link member 103C to the second axis 132A is represented by $L4_2$ and the length L4 from the working point of the link member 103C to the second axis 132A is reduced. Consequently, it is possible to start to reduce the load F in a gripping start state in which the operating lever 102A is opened as shown in Fig. 5(a) and to reduce the load F more greatly when the operating lever 102A is gradually closed as shown in Fig. 5(b). By applying, to the operating mechanism according to the second exemplary embodiment, the structure in which the wire engaging portion is set to take the slot shape, it is possible to adjust both a position of an effort point of an operating load applied from the operating lever to the link member and a position of a working point of the link member for causing a force to act on the inner wire.

In each of the exemplary embodiments, the ratio of the distances between the power working points and effort points and the support points in the operating lever and the link member is not restricted thereto but it is also possible to employ a structure in which the load F applied to the operating lever is set to be constant, a structure in which the load is varied in a stroke of the operating lever, and furthermore, a structure in which the load is gradually varied in the stroke of the operating lever and a structure in which the load is varied at a certain position in the stroke of the operating lever.

<Structure of Operating Mechanism according to Fourth Exemplary embodiment>

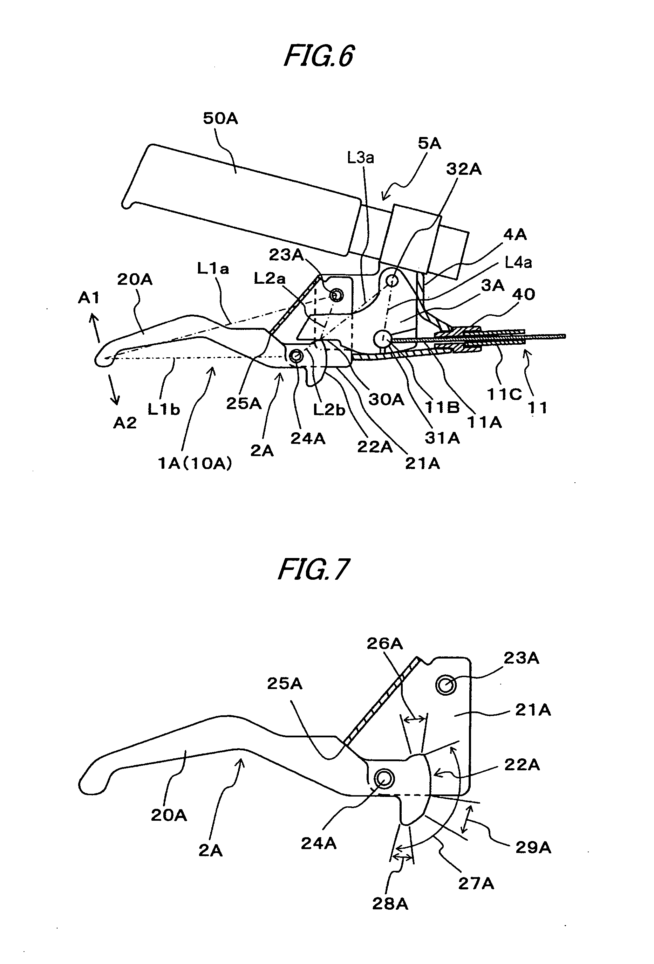

Fig. 6 is a view showing a structure according to an example of an operating mechanism in accordance with a fourth exemplary embodiment and Fig. 7 is a view showing a structure according to an example of an operating lever in the operating mechanism in accordance with the fourth exemplary embodiment. An operating mechanism 1A according to the fourth exemplary embodiment is applied to a human operating mechanism and includes a mechanism for reducing an operating load, thereby relieving a burden of an operator. The operating mechanism 1A according to the fourth exemplary embodiment is applied to a mechanism to be operated by a human hand through an assistive equipment such as a wheelchair. In the example, the operating mechanism 1A is applied to a brake lever 10A for operating a brake of the wheelchair.

The operating mechanism 1A according to the fourth exemplary embodiment includes an operating lever 2A to be operated by an operator, a link member 3A for transmitting an operation of the operating lever 2A to an operating wire 11 serving as a driving force transmitting member for actuating a brake to be an operating target, and a bracket 4A to which the operating lever 2A and the link member 3A are to be attached.

The operating mechanism 1A includes operating load relieving means for relieving an operating load of the operating lever 2A, and holding means for holding the operating target in a predetermined state through an operation of the operating lever 2A having the operating load relieved. The operating mechanism 1A brings a predetermined state in which the operating target is actuated by an operation for moving the operating lever 2A in a first predetermined direction shown in an arrow "A1", and is locked in the predetermined state in which the operating target is actuated by an operation for moving the operating lever 2A in a second direction shown in an arrow "A2" which is reverse to the first direction.

In the operating mechanism 1A, operating force relieving means is implemented at a ratio of distances between power working points and effort points, and support points in the operating lever 2A and the link member 3A. The operating lever 2A is caused to move in the first predetermined direction shown in the arrow "A1" so that the operating load in the operation for bringing the operating target into a predetermined actuating state is reduced. In the example, the operating load in an operation for actuating a brake of a wheelchair is reduced.

Moreover, the operating lever 2A is caused to move in the second direction shown in the arrow "A2" which is reverse to the first direction, thereby reducing the operating load in the operation for locking the operating target into the predetermined actuating state. In the example, the brake of the wheelchair is actuated to reduce an operating load in an operation for holding a braking state.

The operating lever 2A is an example of an operating member and includes an operating portion 20A to be operated by a finger of a hand of an operator, for instance, and an axis switching portion 21A serving as axis switching means for switching an axis to be a support point of a movement of the operating lever 2A depending on a direction in which the operating lever 2A is to be operated.

The operating lever 2A has a working surface 22A provided on one of ends of the operating portion 20A. In the operating lever 2A, moreover, the axis switching portion 21A is pivotally supported rotatably by the bracket 4A through a main axis 23A (a first axis 23A). Furthermore, the operating lever 2A is provided with a sub axis 24A between the main axis 23A and the other end of the operating portion 20A, and one of the end sides of the operating portion 20A is pivotally supported rotatably by the axis switching portion 21A through the sub axis 24A.

The operating lever 2A has a pressing portion 25A provided on the axis switching portion 21A. The pressing portion 25A is pressed against the operating portion 20A between the sub axis 24A and the other end of the operating portion 20A. In the operating lever 2A, the other end side of the operating portion 20A serves as an effort point, and an axis to be a support point of a movement through a rotating operation of the operating lever 2A is switched through a rotation in the first predetermined direction shown in the arrow "A1" and a rotation in the second direction shown in the arrow "A2" which is reverse to the first direction depending on the direction in which the operating portion 20A is to be operated.

In the operating lever 2A, the pressing portion 25A of the axis switching portion 21A is pressed through the operating portion 20A in the first predetermined direction shown in the arrow "A1 so that the operating portion 20A and the axis switching portion 21A rotate integrally around the main axis 23A. On the other hand, in the second direction shown in the arrow "A2" which is reverse to the first direction, the axis switching portion 21A does not rotate but the operating portion 20A rotates around the sub axis 24A.

The working surface 22A provided in the operating portion 20A includes a first working surface 26A and a second working surface 27A. The first working surface 26A serves to press the link member 3A through a rotation in the first direction of the operating lever 2A around the main axis 23A shown in the arrow "A1". The second working surface 27A serves to press the link member 3A through a rotation in the second direction of the operating portion 20A around the sub axis 24A shown in the arrow "A2".

The second working surface 27A constitutes holding means and is formed by a curved surface in which a distance from the sub axis 24A is varied or a combination of a curved surface and a plane, and is provided with a holding surface 28A for holding the operating portion 20A in a position in which the operating target is to be locked in a predetermined actuating state. Moreover, an intermediate holding surface 29A is formed between the first working surface 26A and the holding surface 28A. The intermediate holding surface 29A serves to hold the operating portion 20A in another position in which the operating target is to be locked in a predetermined actuating state.

In the operating lever 2A, the first working surface 26A of the working surface 22A displaced around the main axis 23A serves as a working point for causing a force received by the operating portion 20A to act on the link member 3A in the rotation in the first direction around the main axis 23A in which the operating portion 20A and an axis switching portion 21A are integrated as shown in the arrow "A1". In the operating lever 2A, moreover, the second working surface 27A of the working surface 22A displaced around the sub axis 24A serves as a working point for causing the force received by the operating portion 20A to act on the link member 3A in the rotation in the second direction of the operating portion 20A as shown in the arrow "A2" around the sub axis 24A.

The operating lever 2A has such a structure that a length L2a from the first working surface 26A of the working surface 22A serving as the working point to the main axis 23A is smaller than a length L1a from an operating point of the operating portion 20A serving as an effort point to the main axis 23A serving as the support point. Moreover, the operating lever 2A has such a structure that a length L2b from the second working surface 27A of the working surface 22A serving as the working point to the sub axis 24A is smaller than a length L1b from the operating point of the operating portion 20A serving as the effort point to the sub axis 24A serving as the support point.

The link member 3A includes a pressing surface 30A with which the working surface 22A of the operating lever 2A is to come in contact, and a wire engaging portion 31A to which an inner wire 11A of the operating wire 11 is to be attached, and is pivotally supported by the bracket 4A through a link axis 32A (a second axis 32A).

The pressing surface 30A constitutes holding means and is pressed against the working surface 22A of the operating lever 2A to receive a force, and furthermore, is formed by a plane or a curved surface along which the working surface 22A coming in contact therewith can smoothly slide or a combination of the plane and the curved surface.

The link member 3A rotates around the link axis 32A upon receipt of a force from the first working surface 26A of the working surface 22A displaced with a rotation of the operating lever 2A around the main axis 23A depending on a direction in which the operating lever 2A is to be operated with a contact part of the pressing surface 30A and the working surface 22A of the operating lever 2A set to be an effort point. Moreover, the link member 3A rotates around the link axis 32A upon receipt of a force from the second working surface 27A of the working surface 22A displaced with the rotation of the operating portion 20A around the sub axis 24A.

The wire engaging portion 31A is constituted to take a cylindrical shape in which a cylindrical engaging portion 11B referred to as a drum and formed on an end of the inner wire 11A is fitted removably and rotatably, and pulls the inner wire 11A through the rotation of the link member 3A around the link axis 32A.

The link member 3A has such a structure that the wire engaging portion 31A serves as a working point and a length L3a from the pressing surface 30A serving as an effort point to the link axis 32A serving as the support point is almost equal to a length L4a from the wire engaging portion 31A to the link axis 32A or L3a is greater than L4a.

The bracket 4A is an example of a fixing member and is attached to a handle portion 5A to be held by a hand of an operator. A grip 50A to be held by the hand is attached to the handle portion 5A, and the bracket 4A is attached to the handle portion 5A on one of end sides of the grip 50A.

The main axis 23A and the link axis 32A are formed in such a manner that the link member 3A is disposed on an inside to be one of end sides of the operating lever 2A in the bracket 4A. The bracket 4A can have a structure in which an attaching portion of the main axis 23A and the link axis 32A is formed to support the operating lever 2A and the link member 3A by a single member.

Consequently, support points, and power working points and effort points in the operating lever 2A and the link member 3A are provided from the link axis 32A toward the operating portion 20A serving as the operating point of the operating lever 2A in order of the link axis 32A serving as the support point of the link member 3A, the main axis 23A serving as the first support point of the operating lever 2A, the contact part of the pressing surface 30A of the link member 3A serving as the working point of the operating lever 2A and the effort point of the link member 3A and the working surface 22A of the operating lever 2A, and the sub axis 24A serving as the second support point of the operating lever 2A.

The bracket 4A includes an adjuster 40 for supporting an outer wire 11C of the operating wire 11 through which the inner wire 11A is to be inserted. The adjuster 40 can regulate a braking margin through an adjustment of an amount of a protrusion from the bracket 4A.

<Operation of Operating Mechanism according to Fourth Exemplary embodiment>

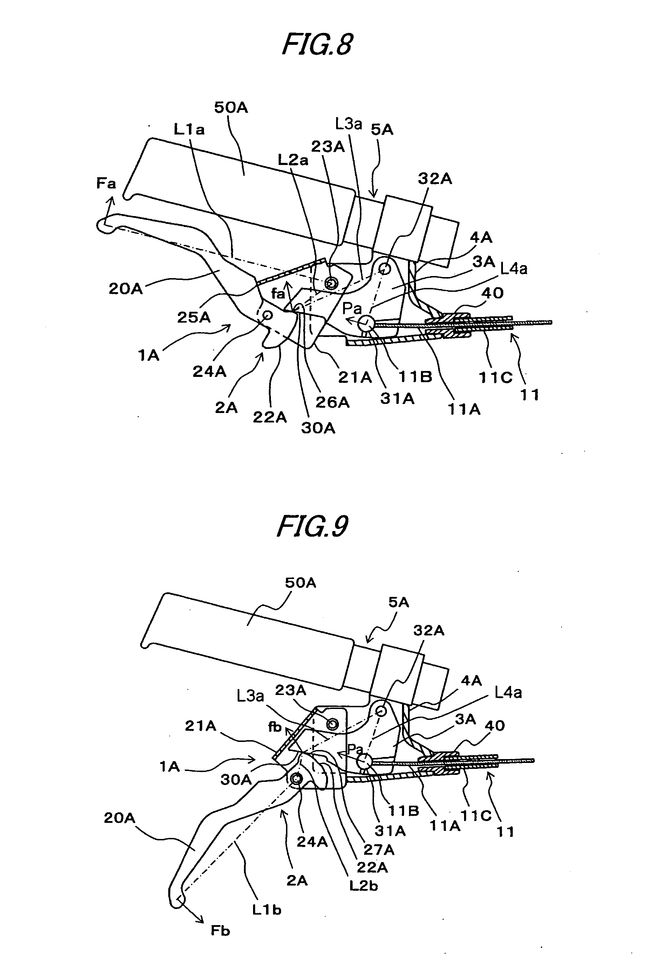

Figs. 8 to 11 are explanatory views showing an operation, illustrating an example of an operation of the operating mechanism according to the fourth exemplary embodiment. Next, an operation of the operating mechanism 1A according to the fourth exemplary embodiment will be described with reference to each of the drawings. In the operating mechanism 1A, when the operating lever 2A in an opening state as shown in Fig. 6 is gripped by a hand holding the grip 50A of the handle portion 5A so that the operating lever 2A is pulled in the first direction shown in the arrow "A1", the pressing portion 25A of the axis switching portion 21A is pressed by the operating portion 20A. In the operating lever 2A, consequently, the operating portion 20A and the axis switching portion 21A rotate integrally around the main axis 23A in the first direction shown in the arrow "A1".

The link member 3A rotates around the link axis 32A upon receipt of a force from the first working surface 26A of the working surface 22A displaced with the rotation of the operating lever 2A around the main axis 23A through the pressing surface 30A.

The link member 3A rotates so that the inner wire 11A attached to the wire engaging portion 31A is pulled and the operating lever 2A is operated to be closed as shown in Fig. 8. Consequently, it is possible to actuate a brake by pulling the inner wire 11A.

On the other hand, when the operating lever 2A is pushed in the second direction shown in the arrow "A2" in the opening state as shown in Fig. 6 in the operating mechanism 1A, the axis switching portion 21A does not rotate but the operating portion 20A rotates around the sub axis 24A in the second direction shown in the arrow "A2" in the operating lever 2A.

The link member 3A rotates around the link axis 32A upon receipt of a force from the second working surface 27A of the working surface 22A displaced with the rotation of the operating portion 20A around the sub axis 24A through the pressing surface 30A.

When the link member 3A rotates, the inner wire 11A attached to the wire engaging portion 31A is pulled. By operating the operating lever 2A in a pushing direction as shown in Fig. 9, similarly, it is possible to actuate the brake by pulling the inner wire 11A.

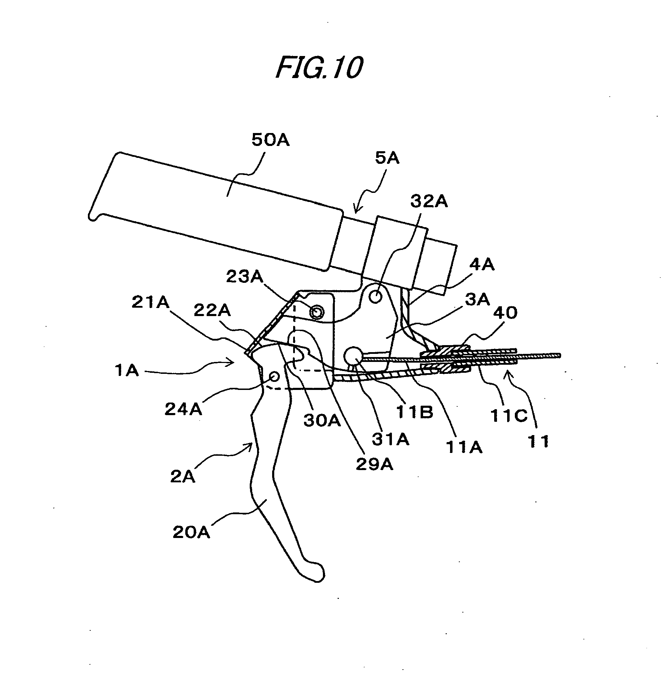

In the operating mechanism 1A, when the operating portion 20A is caused to rotate to reach a position in which the intermediate holding surface 29A of the working surface 22A is to come in contact with the pressing surface 30A of the link member 3A as shown in Fig. 10, the inner wire 11A is pulled by a force for restoring a brake (not shown) into a non-braking state by means of a spring of the brake. Consequently, the pressing surface 30A is pressed against the intermediate holding surface 29A by a force for causing the link member 3A to rotate in a reverse direction to a rotating direction through the operation of the operating portion 20A in the second direction shown in the arrow "A2". Thus, the operating portion 20A is held in an intermediate position depending on a shape of the intermediate holding surface 29A.

By setting the shape of the intermediate holding surface 29A to cause the link member 3A to rotate in a predetermined amount so as to pull the inner wire 11A, thereby actuating the brake and enabling a hold in a predetermined braking state, for instance, a state in which a wheelchair is stopped in a condition that the pressing surface 30A is pressed against the intermediate holding surface 29A, it is possible to hold the operating portion 20A in an intermediate position even if the operating portion 20A is released when the operating portion 20A is operated to reach the intermediate position, and furthermore, to actuate the brake, thereby holding a braking state in which the wheelchair can be stopped. In the example, an orientation in which the operating portion 20A crosses the handle portion 5A is set to be the intermediate position.

When the operating lever 2A having the operating portion 20A placed in the intermediate position is further pushed in the second direction shown in the arrow "A2", the operating portion 20A further rotates around the sub axis 24A. The link member 3A is held at a predetermined angle obtained by the rotation to bring a predetermined braking state through the actuation of the brake upon receipt of a force from the second working surface 27A of the working surface 22A displaced with the rotation of the operating portion 20A around the sub axis 24A through the pressing surface 30A. It is also possible to employ a structure in which the link member 3A rotates in such a direction as to increase a braking force when the operating lever 2A having the operating portion 20A placed in the intermediate position is further pushed in the second direction shown in the arrow "A2".

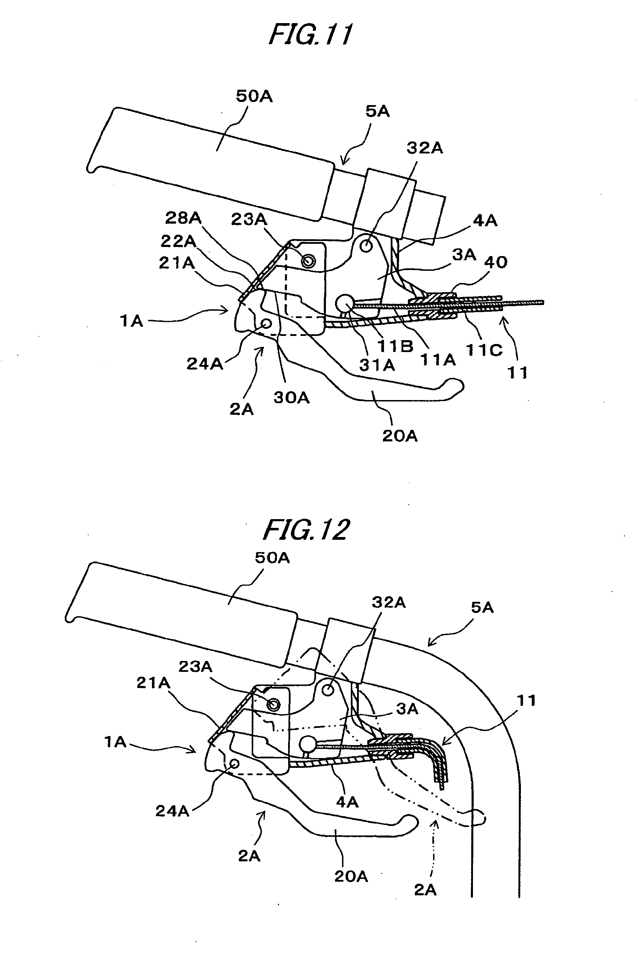

In the operating mechanism 1A, when the operating portion 20A is caused to rotate to reach such a position that the holding surface 28A of the working surface 22A is to come in contact with the pressing surface 30A of the link member 3A as shown in Fig. 11, the inner wire 11A is pulled by a force of a spring for restoring the brake which is not shown. Consequently, the pressing surface 30A is pressed against the holding surface 28A by a force for causing the link member 3A to rotate, and the operating portion 20A is held in a locking position depending on a shape of the holding surface 28A.

By setting the shape of the holding surface 28A in such a manner that the link member 3A rotates in a predetermined amount to pull the inner wire 11A, thereby actuating the brake and enabling a hold in a predetermined braking state, for instance, a state in which a wheelchair is stopped also in a condition that the pressing surface 30A is pressed against the holding surface 28A, it is possible to hold the operating portion 20A in a locking position even if the operating portion 20A is released when the operating portion 20A is operated to reach the locking position, and furthermore, to actuate the brake, thereby holding a braking state in which a stoppage can be carried out. In the example, an orientation in which the operating portion 20A is provided along the handle portion 5A is set to be the locking position.

In an operation for causing the operating lever 2A to rotate in the first direction shown in the arrow "A1", thereby actuating the brake of the wheelchair, a load Fa applied to the operating lever 2A acts at a ratio of distances between power working points and effort points, and support points in the operating lever 2A and the link member 3A. In the operating lever 2A, a length from an operating point of the operating portion 20A serving as an effort point to the main axis 23A serving as a support point is represented by L1a and a length from the first working surface 26A of the working surface 22A serving as a working point to the main axis 23A is represented by L2a. In the link member 3A, a length from the pressing surface 30A serving as an effort point to the link axis 32A serving as a support point is represented by L3a and a length from the wire engaging portion 31A serving as a working point to the link axis 32A is represented by L4a.

A load applied from the inner wire 11A to the wire engaging portion 31A of the link member 3A by a force of a spring for restoring the brake to be an operating target is represented by Pa. Moreover, a load applied to the contact part of the pressing surface 30A of the link member 3A serving as the working point of the operating lever 2A and the effort point of the link member 3A and the first working surface 26A of the operating lever 2A is represented by fa.

The load Fa applied to the operating portion 20A of the operating lever 2A is calculated in accordance with the following Equation (i) and the load fa applied to the pressing surface 30A of the link member 3A is calculated in accordance with the following Equation (ii). By substituting the Equation (ii) for the Equation (i), it is possible to obtain, in accordance with Equation (iii), a relationship between the load Fa applied to the operating portion 20A of the operating lever 2A and the load Pa applied from the inner wire 11A to the wire engaging portion 31A of the link member 3A.

In an operation for causing the operating lever 2A to rotate in the second direction shown in the arrow "A2", thereby actuating the brake of the wheelchair to hold a braking state, similarly, a load Fb applied to the operating lever 2A acts at a ratio of distances between power working points and effort points, and support points in the operating portion 20A of the operating lever 2A and the link member 3A. In the operating lever 2A, a length from the operating point of the operating portion 20A serving as the effort point to the sub axis 24A serving as a support point is represented by L1b and a length from the second working surface 27A of the working surface 22A serving as the working point to the sub axis 24A is represented by L2b. In the link member 3A, the length from the pressing surface 30A serving as the effort point to the link axis 32A serving as the support point is represented by L3a and the length from the wire engaging portion 31A serving as the working point to the link axis 32A is represented by L4a.

The load applied from the inner wire 11A to the wire engaging portion 31A of the link member 3A by the force of the spring for restoring the brake to be the operating target is represented by Pa. Moreover, a load applied to the contact part of the pressing surface 30A of the link member 3A serving as the working point of the operating lever 2A and the effort point of the link member 3A and the second working surface 27A of the operating portion 20A is represented by fb.

The load Fb applied to the operating portion 20A of the operating lever 2A is calculated in accordance with the following Equation (iv) and the load fb applied to the pressing surface 30A of the link member 3A is calculated in accordance with the following Equation (v). By substituting the Equation (v) for the Equation (iv), it is possible to obtain, in accordance with Equation (vi), a relationship between the load Fb applied to the operating portion 20A of the operating lever 2A and the load Pa applied from the inner wire 11A to the wire engaging portion 31A of the link member 3A.

$$Fa = \frac{fa \cdot L2a}{L1a} \quad \dots \text{(i)}$$

$$fa = \frac{Pa \cdot L4a}{L3a} \quad \dots \text{(ii)}$$

$$Fa = \frac{\dfrac{Pa \cdot L4a}{L3a} \cdot L2a}{L1a} \quad \dots \text{(iii)}$$

$$Fb = \frac{fb \cdot L2b}{L1b} \quad \cdots \text{(iv)}$$

$$fb = \frac{Pa \cdot L4a}{L3a} \quad \cdots \text{(v)}$$

$$Fb = \frac{\dfrac{Pa \cdot L4a}{L3a} \cdot L2b}{L1b} \quad \cdots \text{(vi)}$$

In the operation for actuating the brake of the wheelchair, based on the Equation (iii), it is possible to reduce the load Fa applied to the operating portion 20A of the operating lever 2A more greatly when L1 a and L3a are great, L2a and L4a are small, L1 a is greater than L2a, and L3a is greater than L4a. Moreover, it is possible to reduce the load Fa more greatly when L2a is smaller than L3a.

In the operation for actuating the brake of the wheelchair to hold the braking state, based on the Equation (vi), it is possible to reduce the load Fb applied to the operating portion 20A of the operating lever 2A more greatly when L1b and L3a are great, L2b and L4a are small, L1b is greater than L2b, and L3a is greater than L4a. Moreover, it is possible to reduce the load Fb more greatly when L2b is smaller than L3a.

In the operating mechanism 1A, the support points, and the power working points and effort points in the operating lever 2A and the link member 3A are provided from the link axis 32A toward the operating portion 20A serving as the operating point of the operating lever 2A in order of the link axis 32A of the link member 3A, the main axis 23A of the operating lever 2A, and the contact part of the pressing surface 30A of the link member 3A and the working surface 22A of the operating lever 2A. Consequently, it is possible to satisfy a condition for reducing the load in accordance with the Equation (iii) without increasing a size of the mechanism. The load Fa is started to be reduced in a gripping start state in which the operating lever 2A is opened as shown in Fig. 6. It is possible to continuously reduce the load Fa until the operating lever 2A is closed as shown in Fig. 8.

In the operating lever 2A and the link member 3A, positions of axes serving as support points of rotations are different from each other, and a locus of the first working surface 26A of the working surface 22A through the rotation of the operating lever 2A around the main axis 23A is different from that of the pressing surface 30A through the rotation of the link member 3A around the link axis 32A.

For this reason, it is necessary to employ a structure in which one of the first working surface 26A and the pressing surface 30A is displaced to follow the other locus. There is employed a structure in which the first working surface 26A slides along the pressing surface 30A through the rotations of the operating lever 2A and the link member 3A. In the operation for causing the operating lever 2A to rotate in the first direction shown in the arrow "A1", the length L2a from the first working surface 26A serving as the working point on the link member 3A to the main axis 23A serving as the support point is constant. When the first working surface 26A slides along the pressing surface 30A, accordingly, the length L3a from the pressing surface 30A serving as the effort point in the link member 3A to the link axis 32A serving as the support point is varied.

It is apparent from the Equation (iii) that the load Fa is increased when the length L3a is varied in a decreasing direction. In order to vary the length L3a in an increasing direction and to decrease a variation through the rotations of the operating lever 2A and the link member 3A, therefore, there are determined a position of each axis and positions and shapes of the first working surface 26A and the pressing surface 30A.

Moreover, the operating lever 2A is divided into the operating portion 20A and the axis switching portion 21A, and is pivotally supported by the sub axis 24A provided between the main axis 23A and the other end of the operating portion 20A. In an operation to be carried out in locking, consequently, it is possible to satisfy the condition for reducing a load based on the Equation (vi) while decreasing the length of the operating lever 2A to reduce an operating locus as compared with a normal operation.

In the operating lever 2A, the length L1b from the operating point of the operating portion 20A serving as the effort point to the sub axis 24A serving as the support point in the rotation in the second direction is smaller than the length L1a from the same operating point to the main axis 23A serving as the support point in the rotation in the first direction. On the other hand, the length L2b from the second working surface 27A of the working place 22A serving as the working point in the rotating operation in the second direction to the sub axis 24A is smaller than the length L2a from the first working surface 26A of the working surface 22A serving as the working point in the rotating operation in the first direction to the main axis 23A.

The load Fb applied to the operating lever 2A in the rotating operation in the second direction acts at a ratio of distances between the power working points and effort points and the support points in the operating portion 20A of the operating lever 2A and the link member 3A. Even if the length of the operating lever 2A is reduced, therefore, it is possible to relieve the load.

Fig. 12 is an explanatory view showing an operation, illustrating an example of an effect of the operating mechanism according to the fourth exemplary embodiment. Fig. 12 shows, in a solid line, a state in which the operating portion 20A is rotated to reach the locking position. On the other hand, a state in which the operating lever 2A is caused to rotate around the main axis 23A to reach a corresponding position to the locking position is shown in a two-dotted chain line. With a structure in which the operating lever 2A is integrated and the axis is not switched, an amount of a protrusion from the bracket 4A is increased in a state in which the operating lever 2A is caused to rotate to reach the corresponding position to the locking position. For this reason, there is a possibility that the operating lever 2A might interfere with the handle portion 5A if the handle portion 5A takes a bending shape as shown in Fig. 12.

On the other hand, with a structure in which the operating lever 2A is divided into the operating portion 20A and the axis switching portion 21A and the axis is switched, the amount of the protrusion from the bracket 4A is reduced in a state in which the operating portion 20A is caused to rotate to reach the locking position. Therefore, it is possible to reduce the possibility that the operating lever 2A might interfere with the handle portion 5A even if the handle portion 5A takes the bending shape.

By enabling the locking position of the operating lever 2A to have an orientation in which the operating portion 20A is disposed along the handle portion 5A, moreover, it is possible to increase an amount of the rotation of the operating lever 2A. Consequently, it is possible to increase an amount of the rotation of the link member 3A more greatly as compared with a normal brake actuation without increasing an operating load. Consequently, it is possible to increase a braking force of the brake more greatly than that in a normal braking operation and to lock the brake in a state in which the operating lever 2A is caused to rotate to reach the locking position. Thus, it is possible to carry out a hold more reliably in a stopping state without increasing the operating load.

Depending on the shape of the handle portion 5A, it is also possible to set the intermediate position shown in Fig. 10 into the locking position, Moreover, a position in which the operating lever 2A is to be held can be set depending on the shape of the second working surface 27A of the working surface 22A.

In the operating mechanism 1A, the bracket to which the operating lever 2A is to be attached and the bracket to which the link member 3A is to be attached may be constituted by independent components. By employing a structure in which the operating lever 2A and the link member 3A are supported by the independent brackets, it is possible to adjust the position in which the bracket is to be attached, thereby varying the ratio of the distances between the power working points and effort points and the support points in the operating lever 2A and the link member 3A. Thus, it is possible to regulate a load.

<Structure of Operating Mechanism according to Fifth Exemplary embodiment>

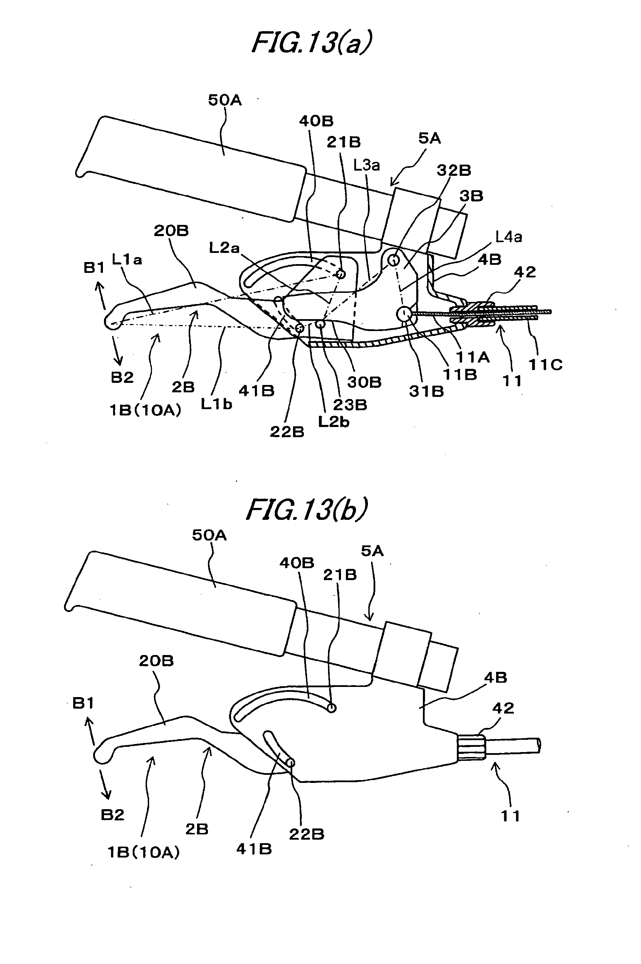

Figs. 13(a) and 13(b) are views showing a structure according to an example of an operating mechanism in accordance with a fifth exemplary embodiment, and Fig. 13(a) is a sectional view showing an internal structure of the operating mechanism according to the fifth exemplary embodiment and Fig. 13(b) is a view showing a structure, illustrating an appearance of the operating mechanism.

An operating mechanism 1 B according to the fifth exemplary embodiment is applied to a human operating mechanism and includes a mechanism for reducing an operating load. Consequently, a burden of an operator is relieved. The operating mechanism 1B according to the fifth exemplary embodiment is applied to a mechanism to be operated by a human hand in an assistive equipment such as a wheelchair. In the example, there will be described an example in which the operating mechanism 1B is applied to a brake lever 10A for operating a brake of a wheelchair.

The operating mechanism 1B according to the fifth exemplary embodiment includes an operating lever 2B to be operated by an operator, a link member 3B for transmitting an operation of the operating lever 2B to an operating wire 11 serving as a driving force transmitting member for actuating a brake to be an operating target, and a bracket 4B to which the operating lever 2B and the link member 3B are to be attached.

The operating mechanism 1B includes operating load relieving means for relieving an operating load of the operating lever 2B, and holding means for locking the operating target in a predetermined actuating state through an operation of the operating lever 2B having the operating load relieved. The operating mechanism 1B brings the operating target into a predetermined actuating state by an operation for causing the operating lever 2B to move in a first predetermined direction shown in an arrow "B1", and locks the operating target in the predetermined actuating state by an operation for causing the operating lever 2B to move in a second direction shown in an arrow "B2" which is reverse to the first direction.

In the operating mechanism 1B, operating force relieving means is implemented at a ratio of distances between power working points and effort points, and support points in the operating lever 2B and the link member 3B. The operating lever 2B is caused to move in the first predetermined direction shown in the arrow "B1" so that the operating load in the operation for bringing the operating target into the predetermined actuating state is reduced. In the example, the operating load in an operation for actuating a brake of a wheelchair is reduced.

Moreover, the operating lever 2B is caused to move in the second direction shown in the arrow "B2" which is reverse to the first direction, thereby reducing the operating load in the operation for locking the operating target into the predetermined actuating state. In the example, the brake of the wheelchair is actuated to reduce an operating load in an operation for holding a braking state.

The operating lever 2B is an example of an operating member and one of end sides of an operating portion 20B to be operated by a finger of a hand of an operator, for instance, is pivotally supported by the bracket 4B through a main axis 21B (a first axis 21B) and a sub axis 22B. The operating lever 2B rotates around the main axis 21B or the sub axis 22B by a force received through the operating portion 20B with the other end side of the operating portion 20B serving as an effort point. In other words, in the operating mechanism 1B, an axis serving as a support point of a movement through the rotating operation of the operating lever 2B is switched depending on a direction in which the operating lever 2B is to be operated, and the main axis 21B serves as a support point in a rotation in the first predetermined direction shown in the arrow "B1" and the sub axis 22B serves as a support point in a rotation in the second direction shown in the arrow "B2" which is reverses to the first direction.

The operating lever 2B includes a working pin 23B between the operating portion 20B and sub axis 22B and the main axis 21B. The working pin 23B constitutes holding means and is displaced with a rotation of the operating lever 2B around the main axis 21 B, and serves as a working point for causing a force received by the operating portion 20B to act on the link member 3B. Moreover, the working pin 23B is displaced with a rotation of the operating lever 2B around the sub axis 22B and serves as the working point for causing the force received by the operating portion 20B to act on the link member 3B.

The operating lever 2B has such a structure that a length L2a from the working pin 23B serving as the working point to the main axis 21 B is smaller than a length L1 a from an operating point of the operating portion 20B serving as an effort point to the main axis 21B serving as the support point in the rotation in the first direction shown in the arrow "B1". Moreover, the operating lever 2B has such a structure that a length L2b from the working pin 23B serving as the working point to the sub axis 22B is smaller than a length L1b from the operating point of the operating portion 20B serving as the effort point to the sub axis 22B serving as the support point in the rotation in the second direction shown in the arrow "B2".

The link member 3B includes a pressing surface 30B with which the working pin 23B of the operating lever 2B is to come in contact, and a wire engaging portion 31 B to which an inner wire 11A of the operating wire 11 is to be attached, and is pivotally supported by the bracket 4B through a link axis 32B (a second axis 32B).

The pressing surface 30B constitutes holding means and is pressed against the working pin 23B of the operating lever 2B and thus receives a force, and furthermore, is constituted by a plane or a curved surface along which the working pin 23B coming in contact therewith can smoothly slide. The link member 3B rotates around the link axis 32B upon receipt of a force from the working pin 23B displaced with a rotation of the operating lever 2B around the main axis 21B with a contact part of the pressing surface 30B and the working pin 23B of the operating lever 2B set to be an effort point. Moreover, the link member 3B rotates around the link axis 32B upon receipt of a force from the working pin 23B displaced with a rotation of the operating lever 2B around the sub axis 22B.

The wire engaging portion 31 B is constituted to take a cylindrical shape in which a cylindrical engaging portion 11B referred to as a drum and formed on an end of the inner wire 11A is fitted removably and rotatably, and pulls the inner wire 11A through the rotation of the link member 3B around the link axis 32B.

The link member 3B has such a structure that the wire engaging portion 31B serves as a working point and a length L3a from the pressing surface 30B serving as the effort point to the link axis 32B serving as the support point is almost equal to a length L4a from the wire engaging portion 31 B to the link axis 32B or L3a is greater than L4a.

The bracket 4B is an example of a fixing member and is attached to a handle portion 5A to be held by a hand of an operator. A grip 50A to be held by the hand is attached to the handle portion 5A, and the bracket 4B is attached to the handle portion 5A on one of end sides of the grip 50A.

The bracket 4B includes a first axis supporting portion 40B for supporting the main axis 21 B, and a second axis supporting portion 41B for supporting the sub axis 22B. The first axis supporting portion 40B and the second axis supporting portion 41B are an example of axis switching means, and the first axis supporting portion 40B is constituted by a slot along a locus of the main axis 21B through a rotation of the operating lever 2B around the sub axis 22B. The second axis supporting portion 41 B is constituted by a slot along a locus of the sub axis 22B through a rotation of the operating lever 2B around the main axis 21B.

Consequently, support points, and power working points and effort points in the operating lever 2B and the link member 3B are provided from the link axis 32B toward the operating portion 20B serving as the operating point of the operating lever 2B in order of the link axis 32B serving as the support point of the link member 3B, the main axis 21 B serving as the support point of the operating lever 2B, the contact part of the pressing surface 30B of the link member 3B serving as the working point of the operating lever 2B and the effort point of the link member 3B and the working pin 23B of the operating lever 2B, and the sub axis 22B serving as the support point of the operating lever 2B.

The bracket 4B includes an adjuster 42 for supporting an outer wire 11C of the operating wire 11 through which the inner wire 11A is to be inserted. The adjuster 42 can regulate a braking margin through an adjustment of an amount of a protrusion from the bracket 4B.

<Operation of Operating Mechanism according to Fifth Exemplary embodiment>

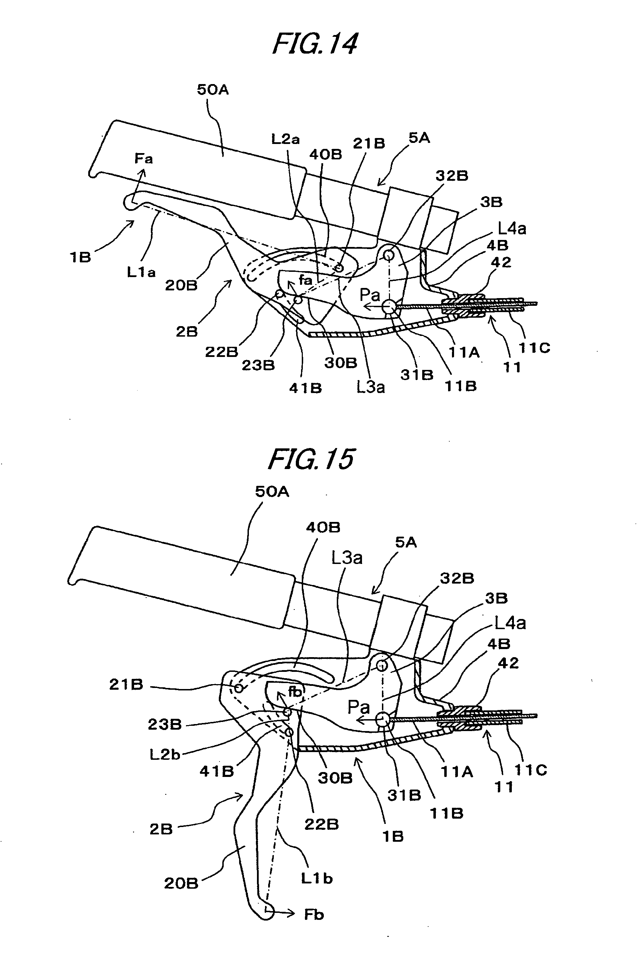

Figs. 14 and 15 are explanatory views showing an operation, illustrating an example of an operation of the operating mechanism according to the fifth exemplary embodiment. Next, an operation of the operating mechanism 1B according to the fifth exemplary embodiment will be described with reference to each of the drawings. In the operating mechanism 1B according to the fifth exemplary embodiment, when the operating lever 2B in the opening state as shown in Fig. 13(a) is gripped by a hand holding the grip 50A of the handle portion 5A and is thus pulled in the first direction shown in the arrow "B1", the main axis 21 B is pushed against one of the ends of the first axis supporting portion 40B so that a movement is controlled. Consequently, the sub axis 22B moves along the second axis supporting portion 41 B so that the operating lever 2B rotates around the main axis 21 B.

The link member 3B rotates around the link axis 32B upon receipt of a force from the working pin 23B displaced with the rotation of the operating lever 2B around the main axis 21 B through the pressing surface 30B.

When the link member 3B rotates, the inner wire 11A attached to the wire engaging portion 31 B is pulled. By carrying out an operation to close the operating lever 2B as shown in Fig. 14, it is possible to pull the inner wire 11A, thereby actuating the brake.

On the other hand, when the operating lever 2B is pushed in the second direction shown in the arrow "B2" in the opening state as shown in Fig. 13(a) in the operating mechanism 1B, the sub axis 22B is pushed against one of the ends of the second axis supporting portion 41B so that the movement is controlled. Consequently, the main axis 21B moves along the first axis supporting portion 40B so that the operating lever 2B rotates around the sub axis 22B.

The link member 3B rotates around the link axis 32B upon receipt of a force from the working pin 23B displaced with the rotation of the operating lever 2B around the sub axis 22B through the pressing surface 30B.

When the link member 3B rotates, the inner wire 11A attached to the wire engaging portion 31 B is pulled. By operating the operating lever 2B in a pushing direction as shown in Fig. 15, similarly, it is possible to pull the inner wire 11A, thereby actuating the brake.

When the operating lever 2B is caused to rotate to reach a predetermined position in the second direction shown in the arrow "B2" as shown in Fig. 15 in the operating mechanism 1B, the inner wire 11A is pulled by means of a spring of a brake (not shown) so that there is obtained a positional relationship in which the main axis 21 B and the working pin 23B are arranged on an almost straight line with respect to a direction of a displacement of the pressing surface 30B through the rotation of the link member 3B. When the pressing surface 30B is pressed against the working pin 23B by a force for restoring the brake (not shown), consequently, the operating lever 2B is held in a predetermined locking position based on the shape of the pressing surface 30B and the positional relationship between the main axis 21B and the working pin 23B.

By setting the shape of the pressing surface 30B and the positional relationship between the main axis 21B and the working pin 23B in such a manner that the link member 3B is caused to rotate in a predetermined amount and the inner wire 11A is thus pulled to actuate the brake, thereby enabling a hold in a predetermined braking state, for instance, a state in which a wheelchair is stopped in a condition that the operating lever 2B is caused to rotate to reach the locking position, it is possible to hold the operating lever 2B in the locking position even if the operating lever 2B is released when the operating lever 2B is operated to reach the locking position, and furthermore, to hold a braking state in which the brake can be actuated and stopped.

In an operation for causing the operating lever 2B to rotate in the first direction shown in the arrow "B1", thereby actuating the brake of the wheelchair, a load Fa applied to the operating lever 2B acts at a ratio of distances between power working points and effort points, and support points in the operating lever 2B and the link member 3B. A relationship between the load Fa applied to the operating portion 20B of the operating lever 2B and a load Pa applied from the inner wire 11A to the wire engaging portion 31 B of the link member 3B is obtained in accordance with the Equation (iii) in the same manner as in the operating mechanism 1A according to the fourth exemplary embodiment.

In an operation for causing the operating lever 2B to rotate in the second direction shown in the arrow "B2", thereby actuating the brake of the wheelchair to hold a braking state, similarly, a load Fb applied to the operating lever 2B acts at a ratio of distances between power working points and effort points, and support points in the operating lever 2B and the link member 3B. A relationship between the load Fb applied to the operating portion 20B of the operating lever 2B and the load Pa applied from the inner wire 11A to the wire engaging portion 31 B of the link member 3B is obtained in accordance with the Equation (vi) in the same manner as in the operating mechanism 1A according to the fourth exemplary embodiment.

Also in the operating mechanism 1B according to the fifth exemplary embodiment, in the operation for actuating the brake of the wheelchair, it is possible to reduce the load Fa applied to the operating portion 20B of the operating lever 2B more greatly in accordance with the Equation (iii) when L1 a and L3a are great, L2a and L4a are small, L1 a is greater than L2a, and L3a is greater than L4a. Moreover, it is possible to reduce the load Fa more greatly when L2a is smaller than L3a.

In the operation for actuating the brake of the wheelchair to hold the braking state, it is possible to reduce the load Fb applied to the operating portion 20B of the operating lever 2B more greatly in accordance with the Equation (vi) when L1 b and L3a are great, L2b and L4a are small, L1b is greater than L2b, and L3a is greater than L4a. Moreover, it is possible to reduce the load Fb more greatly when L2b is smaller than L3a.

In the operating mechanism 1B according to the fifth exemplary embodiment, the axis serving as the support point of the rotating operation of the operating lever 2B is switched depending on the direction in which the operating lever 2B is to be operated, and the sub axis 22B serving as the support point in the rotation in the second direction shown in the arrow "B2" is provided between the main axis 21 B and the other end of the operating portion 20B. In an operation to be carried out in locking, consequently, it is possible to satisfy a condition for reducing a load in accordance with the Equation (vi) while decreasing a length from the axis of the operating lever 2B to reduce an operating locus as compared with a normal operation.

In the operating lever 2B, the length L1b from the operating point of the operating portion 20B serving as the effort point to the sub axis 22B serving as the support point in the rotation in the second direction is smaller than the length L1 a from the same operating point to the main axis 21 B serving as the support point in the rotation in the first direction. On the other hand, the length L2b from the working pin 23B serving as the working point to the sub axis 22B is smaller than the length L2a from the working pin 23B to the main axis 21 B.

The load Fb applied to the operating lever 2B in the rotating operation in the second direction acts at a ratio of distances between the power working points and effort points and the support points in the operating lever 2B and the link member 3B. Even if the length from the axis of the operating lever 2B is reduced, therefore, it is possible to relieve the load. In the operating lever 2B having the integral structure, moreover, the lever length is reduced by switching the axis. Therefore, it is possible to decrease the number of components, thereby simplifying the structure. In the operating mechanism 1B according to the fifth exemplary embodiment, it is also possible to form, on the pressing surface 30B, an intermediate holding surface for controlling the movement of the working pin 23B, thereby holding the operating lever 2B in a predetermined intermediate position.

<Example of Application of Operating Mechanism according to Exemplary embodiments to Assistive equipment>

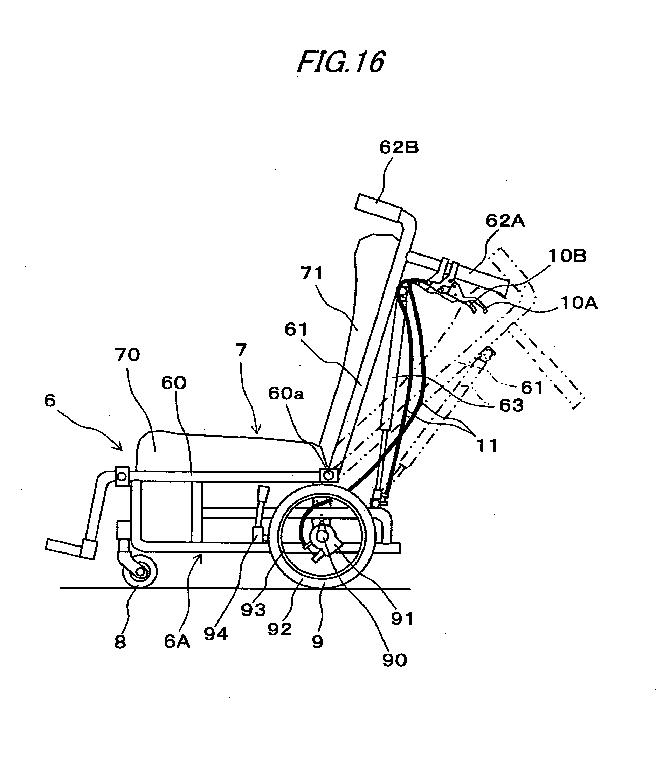

Next, a welfare tool to be used for a nursing care will be described as an example of an application of the operating mechanisms according to the exemplary embodiments to an assistive equipment. Fig. 16 is a view showing a structure according to an example of a wheelchair to be the welfare tool. A wheelchair 6 includes a frame 6A, a chair portion 7 attached to the frame 6A, a front wheel 8 attached to the frame 6A, and a rear wheel 9 attached to the frame 6A.

The frame 6A is constituted by a combination of pipes formed of a metal, for instance, and includes a seat face supporting portion 60 for supporting a seat face 70 constituting the chair portion 7, and a back face supporting portion 61 for supporting a back face 71 constituting the chair portion 7. Moreover, the frame 6A includes a first handle portion 62A in the back face supporting portion 61.

The first handle portion 62A takes such a configuration as to be protruded rearward from the back face supporting portion 61, for instance, and constitutes the handle portion 105A described with reference to Figs. 1 and 5, the handle portion 105B described with reference to Fig. 3 or the handle portion 5A described with reference to Figs. 6 and 14.

The wheelchair 6 according to the example includes a so-called reclining mechanism which can tilt the back face 71 of the chair portion 7 as shown in a two-dotted chain line in Fig. 16. Therefore, the seat face supporting portion 60 and the back face supporting portion 61 are tiltably coupled to each other through a tiltable support point 60a. Moreover, there is provided a hydraulic cylinder 63 for supporting the back face supporting portion 61. Furthermore, a second handle portion 62B is provided on an upper end of the back face supporting portion 61 in order to easily carry out an operation in a state in which the back face supporting portion 61 is tilted. The second handle portion 62B takes such a configuration as to be protruded forward from a top of the back face supporting portion 61, for instance.

The front wheel 8 has a free caster function and is attached rotatably in such a manner that the wheelchair 6 can advance in an optional direction. The rear wheel 9 has a hub 90 supported by the frame 6A rotatably.

The wheelchair 6 includes a brake 91 to be actuated over the rear wheel 9 in order to carry out braking which is mainly intended for a stoppage. The brake 91 is obtained by attaching, to the hub 90, a band brake which is of such a type as to fasten an outer periphery of a cylindrical rotor by means of a band-shaped frictional member, for instance.

For the brake 91, it is also possible to employ a disc brake to be attached to the hub 90 or a brake acting on a rim 93 having a tire 92 attached thereto. The wheelchair 6 may include a hand brake 94 for holding a static state in addition to the brake 91.

In the wheelchair 6, the first handle portion 62A includes the brake lever 110A or 10A applying the operating mechanism 101A according to the first exemplary embodiment described with reference to Fig. 1, the operating mechanism 101B according to the second exemplary embodiment described with reference to Fig. 3, the operating mechanism 101C according to the third exemplary embodiment described with reference to Fig. 5, the operating mechanism 1A according to the fourth exemplary embodiment described with reference to Fig. 6 or the operating mechanism 1B according to the fifth exemplary embodiment described with reference to Fig. 14 as a mechanism for operating the brake 91.

In the wheelchair 6, moreover, the first handle portion 62A includes the reclining lever 110B applying the operating mechanism 101A, the operating mechanism 101B or the operating mechanism 101C as a mechanism for operating the hydraulic cylinder 63 to actuate the reclining mechanism, or the reclining lever 10B applying an operating mechanism having operating load relieving means and no holding means.

The brake lever 110A or 10A is connected to the brake 91 through the operating wire 111 or 11, and the inner wire described with reference to Fig. 1 is pulled so that the brake 91 is actuated. Moreover, the reclining lever 110B or 10B is connected to the hydraulic cylinder 63 through the operating wire 11 and the inner wire is pulled so that the hydraulic cylinder 63 is actuated.

In the brake lever 110A or 10A applying the operating mechanism 101A, 101 B, 101C, 1A or 1B, the load F or Fa is started to be reduced in a gripping start state in which the operating lever 102A, 2A or 2B is opened and can be continuously reduced until the operating lever 102A, 2A or 2B is closed as described with reference to Fig. 2. Consequently, it is possible to grip the operating lever by a small force, thereby obtaining a sufficient braking force. Therefore, it is possible to relieve a burden of an operator. In particular, a person having a small grasping power can also obtain a sufficient braking force. Moreover, it is possible to use an existing brake for the brake 91. Thus, it is possible to relieve the burden at a low cost.

In the brake lever 10A applying the operating mechanism 1A or 1B, moreover, the load Fb for operating the operating lever 2A or 2B is started to be reduced in a condition that a locking operation is started in a braking state in which the brake can be stopped, and can be continuously reduced until the operating lever 2A or 2B moves to a locking position. Consequently, it is possible to operate the operating lever by a small force, thereby bringing a locking state. Therefore, it is possible to relieve the burden of the operator. In particular, a person having a small grasping power can also bring the locking state easily. The hand brake 94 is provided in a suitable position for an operation of a user sitting on the wheelchair 6. For this reason, an operator such as a carer for carrying out a normal operation, for instance, holding the first handle portion 62A to push the wheelchair 6 is hard to operate. Therefore, the brake lever, 10A is provided with holding means for locking the brake and operating force relieving means. Consequently, it is possible to easily carry out the operation for bringing the brake into the locking state.

The brake of the wheelchair 6 is intended for braking to reliably carry out a stoppage through braking for a speed regulation. Although the brake lever 110A or 10A applying the operating mechanism 101A, 101B, 101C, 1A or 1B has a great stroke in the operating lever 102A or 2A, it is possible to carry out a more reliable braking operation by giving such an operation feeling as to fully grip the operating lever at a smaller load as compared with an operation feeling of a brake applied to a bicycle. In some cases in which the wheelchair 6 is used for a nursing care and the operator is also old, particularly, he (she) has a small grasping power. In these cases, if a position placed in an almost half of a stroke of a brake lever is set to be a braking position as in a regulating method of a brake lever of a general bicycle, it is hard to grip the brake lever by a sufficient force in the braking position. On the other hand, by giving such an operation feeling as to fully grip the operating lever at a small load, it is possible to grip the brake lever by a sufficient force in the braking position, thereby carrying out a reliable braking operation.

In the brake lever 110A applying the operating mechanism 101 B, moreover, the opening side of the operating lever 102B is set to be an index finger or middle finger side.

Consequently, it is possible to ease the operation of the operating lever and to apply a greater force. In the brake lever 110A applying the operating mechanism 101 B or 101C, furthermore, the load F is started to be reduced in a gripping start state in which the operating lever is opened, and can be further reduced when the operating lever is gradually closed. Therefore, it is possible to obtain a more reliable braking force.

In the brake lever 10A applying the operating mechanism 1A, moreover, an orientation in which the operating portion 20A of the operating lever 2A is provided along the handle portion 5A is set to be a locking position, resulting in such a configuration that the operating lever A is not greatly protruded from the handle portion 5A. Thus, it is possible to prevent a malfunction. In addition, the amounts of the rotation of the operating lever 2A in locking and unlocking are increased, and an operating load is relieved. Therefore, a person having a small grasping power or force can also carry out an easy and reliable operation.

The reclining lever 110B or 10B applying the operating mechanism 101A, 101 B or 101C can actuate the hydraulic cylinder 63 at a small load in the same manner as the brake lever 110A or 10A. In the operation for reclining the chair portion 7, particularly, it is necessary to carry out an operation for pulling the first handle portion 62A to tilt the back face supporting portion 61 while gripping the reclining lever 110B or 10B by a hand holding the first handle portion 62A. Moreover, the hydraulic cylinder 63 is actuated by opening/closing a valve which is not shown. Even if the stroke of the operating lever is increased, therefore, it is possible to carry out the operation more reliably and easily by gripping the operating lever at a smaller load.

The brake lever 110A and the reclining lever 110B may include the same mechanism. Moreover, the same handle portion has two levers. Therefore, the operating mechanism 101A according to the first exemplary embodiment is applied to the brake lever 110A and the operating mechanism 101 B according to the second exemplary embodiment is applied to the reclining lever 110B to give different operation feelings. Consequently, it is possible to give any of the operation feelings which is suitable for each function, and furthermore, to prevent an erroneous operation. In addition, with a structure in which the second handle portion 62B also includes the brake lever, it is possible to attach the brake lever without exposing the operating wire forward from the second handle portion 62B if the brake lever applying the operating mechanism 101 B according to the second exemplary embodiment is provided.

The brake lever 110A and the reclining lever 110B may include a mechanism capable of carrying out locking in a position in which the operating lever is closed when the operating lever is gripped. Moreover, the brake 91 may have such a structure as to maintain a stopping state when the operating lever is opened and to be opened when the operating lever is gripped.

The assistive equipment including the operating mechanism according to the invention is not limited to a manual wheelchair but may be applied to an operating mechanism for actuating a tiltable mechanism in another welfare tool, for instance, an electric wheelchair, an electric tricycle or four wheel car, rollators having a brake or a bed for a nursing care. For an assistive equipment other than the welfare tools, moreover, it is also possible to employ a vehicle such as a bicycle having a safety wheel for the elderly, a bicycle for three people together with an infant, or a stroller.

According to the embodiments of the invention, the operating mechanism is provided with the operating member 102A, 102B, 2A or 2B which is pivotally supported by the first axis 121A, 121B. 23A or 21 B, and the link member 103A, 103B, 103C, 3A or 3B supported pivotally by the second axis 132A, 132B, 32A or 32B which is different from the first axis 121A, 121 B, 23A or 21B and serving to transmit the operation of the operating member 102A, 102B, 2A or 2B to the driving force transmitting member 111 or 11.

The effort point of the operating load applied to the link member from the working point of the operating member displaced with the pivotal movement of the operating member around the first axis may be provided on the operating member side from the second axis.

The distance $L1$ or $L1a$ from the operating point of the operating member 102A, 102B, 2A or 2B to the first axis 121A, 121 B, 23A or 21 B may be greater than the distance $L2$ or $L2a$ from the working point 122A, 122B, 26A or 23B of the operating member 102A, 102B, 2A or 2B for causing a force to act on the link member 103A, 103B, 103C, 3A or 3B to the first axis 121A, 121 B, 23A or 21 B.

The distance $L3$ or $L3a$ from the effort point 130A, 130B, 30A or 30B of the link member 103A, 103B, 103C, 3A or 3B for receiving a force from the working point 122A, 122B, 26A or 23B of the operating member 102A, 102B, 2A or 2B to the second axis 132A, 132B, 32A or 32B may be equal to or greater than the distance $L4$, $L4_1$, $L4_2$ or $L4a$ from the working point 131A, 131B, 133, 31A or 31 B of the link member 103A, 103B, 103C, 3A or 3B for causing a force to act on the driving force transmitting member 111 or 11 to the second axis 132A, 132B, 32A or 32B.

It is also possible to employ an arrangement from the second axis 132A, 32A or 32B toward the operating point of the operating member 102A, 2A or 2B in order of the second axis 132A, 32A or 32B, the first axis 121A, 23A or 21 B, and the working point 122A, 26A or 23B of the operating member 102A, 2A or 2B for causing a force to act on the link member 103A, 103C, 3A or 3B.

The first axis 121A, 23A or 21B and the second axis 132A, 32A or 32B may be provided in the fixing member 104A, 4A or 4B which is to be attached to the holding portion 150A or 50A to be held by an operator.

It is also possible to adjust either or both of the position of the effort point for the operating load applied from the operating member 102A, 102B, 2A or 2B to the link member 103A, 103B, 103C, 3A or 3B and the position of the working point 133 of the link member 103C for causing a force to act on the driving force transmitting member.

The second axis 132B may be disposed on one of the sides with respect to the holding portion 150B to be held by an operator and the first axis 121 B may be disposed on the other side, and the effort point 130B of the link member 103B for receiving a force from the operating member 102B may be disposed between the second axis 132B and the first axis 121B.

The engaging portion 133 of the link member 103C to which the driving force transmitting member 111 is to be attached may take a shape of a slot which is extended in such a direction as to vary a distance from the working point of the link member 103C for causing a force to act on the driving force transmitting member 111 to the second axis 132A.

Moreover, the operating mechanism may include the holding means for holding an operating target in a predetermined state through the operation of the operating member.

The holding means may have the intermediate holding surface 29A for holding, in an intermediate position, the operating member 2A for holding an operating target in a predetermined state.

The operating member 2A may have the holding surface 28A for holding the operating member in a position in which the operating target is to be held in the predetermined state in a place coming in contact with the link member 3A.

The operating member 2A or 2B can pivot in the first direction A1 or B1 and the second direction A2 or B2. When the operating member 2A or 2B pivots in the first direction A1 or B1, it pivots around the first axis 23A or 21B. When the operating member 2A or 2B pivots in the second direction A2 or B2, it pivots around the sub axis 24A or 22B. The sub axis 24A or 22B may be disposed between the first axis 23A or 21B and the end of the operating member 2A or 2B.

The operating member 2A may have the holding surface 28A for holding the operating member 2A in a position in which the operating target is to be held in the predetermined state in the place coming in contact with the link member 3A. The operating member 2A moving in the second direction A2 around the sub axis 24A may be held by the holding surface 28A.

The operating member 2A may have the axis switching portion 21A which is pivotally supported by the first axis 23A, and the operating portion 20A which is pivotally supported by the axis switching portion 21A through the sub axis 24A.

The operating mechanism may include the first axis supporting portion 40B for supporting the first axis 21B and the second axis supporting portion 41B for supporting the sub axis 22B. The first axis supporting portion 40B may be formed by a slot provided along the locus of the first axis 21B around the sub axis 22B, and the second axis supporting portion 41 B may be formed by a slot provided along the locus of the sub axis 22B around the first axis 21 B.

According to the embodiments of the invention, moreover, the assistive equipment 6 may include the operating mechanism 101A, 101B, 101C, 1A or 1B and the operating target 91 or 63 which is to be operated by the operating mechanism.

In the assistive equipment 6, there may be provided either or both of the first operating mechanism and the second operating mechanism. In the first operating mechanism, the second axis of the link member, the first axis of the operating member, and the effort point of the operating load applied from the operating member to the link member are disposed in this order from the second axis of the link member toward the operating point of the operating member. In the second operating mechanism, the second axis of the link member is disposed on one of the sides with respect to the holding portion to be held by the operator and the first axis of the operating member is disposed on the other side, and the effort point of the operating load applied from the operating member to the link member is disposed between the second axis and the first axis. The operating targets having different functions may be operated by the same operating mechanism or the different operating mechanisms, respectively.

According to the embodiments of the invention, moreover, the assistive equipment has the operating force relieving means for relieving an operating force of an operating target.

The operating force relieving means may include the operating member which is pivotally supported by the first axis and pivots around the first axis upon receipt of a force of an operator, and the link member supported pivotally by the second axis which is different from the first axis and serving to transmit the operation of the operating member to the driving force transmitting member for actuating the operating target, and a necessary load for the operation of the operating member may be relieved at the ratio of the distances between the power working points and effort points and the support points in the operating member and the link member.

In the operating mechanism according to the embodiments of the invention, the necessary load for the operation of the operating member is relieved at the ratio of the distances between the power working points and effort points and the support points in the operating member and the link member.

Therefore, it is possible to relieve a burden of an operator that operates the operating member.

Moreover, it is also possible to relieve the necessary load for the operation of the operating member through an operation for holding an operating target in a predetermined actuating state.

The assistive equipment according to each of the examples of the invention includes the operating mechanism. Consequently, it is possible to relieve the burden of the operator.

[Description of Reference Numerals and Signs]

| | |
|---|---|
| 101A to 101C | operating mechanism |
| 102A to 102B | operating lever |
| 103A to 103C | link member |
| 104A | bracket |
| 105A, 105B | handle portion |
| 1A, 1B | operating mechanism |
| 2A, 2B | operating lever |
| 3A, 3B | link member |
| 4A, 4B | bracket |
| 5A | handle portion |

**Claims**

1. An operating mechanism comprising:

an operating member (102A, 102B, 2A, 2B) which is pivotally supported on a first axis (121A, 121 B, 23A, 21 B); and
a link member (103A, 103B, 103C, 3A, 3B) pivotally supported on a second axis (132A, 132B, 32A, 32B) which is different from the first axis (121A, 121 B, 23A, 21 B), and configured to transmit an operation of the operating member (102A, 102B, 2A, 2B) to a driving force transmitting member (111, 11).

2. The operating mechanism according to claim 1, wherein a distance (L1, L1a) from the first axis (121A, 121 B, 23A, 21 B) to an operating point of the operating member (1 02A, 102B, 2A, 2B) is greater than a distance (L2, L2a) from the first axis (121A, 121 B, 23A, 21 B) to a working point (122A, 122B, 26A, 23B) of the operating member (102A, 102B, 2A, 2B) for applying a force to the link member (103A, 103B, 103C, 3A, 3B).

3. The operating mechanism according to claim 1, wherein a distance (L3, L3a) from the second axis (132A, 132B, 32A, 32B) to an effort point (130A, 130B, 30A, 30B) of the link member (103A, 103B, 103C, 3A, 3B) for receiving a force from a working point (122A, 122B, 26A, 23B) of the operating member (1 02A, 102B, 2A, 2B) is equal to or greater than a distance (L4, L4$_1$, L4$_2$, L4a) from the second axis (132A, 132B, 32A, 32B) to a working point (131A, 131B, 133, 31A, 31B) of the link member (103A, 103B, 103C, 3A, 3B) for applying a force to the driving force transmitting member (111, 11).

4. The operating mechanism according to claim 1, wherein the second axis (132A, 32A, 32B), the first axis (121A, 23A, 21 B), and a working point (122A, 26A, 23B) of the operating member (102A, 2A, 2B) for applying a force to the link member (103A, 103C, 3A, 3B) are disposed in this order from the second axis (132A, 32A, 32B) toward an operating point of the operating member (102A, 2A, 2B).

5. The operating mechanism according to claim 1, wherein the first axis (121A, 23A, 21B) and the second axis (132A, 32A, 32B) are provided on a fixing member (104A, 4A, 4B) attached to a holding portion (150A, 50A) to be held by an operator.

6. The operating mechanism according to claim 1, wherein it is possible to adjust either or both of a position of an effort point of an operating load applied from the operating member (102A, 102B, 2A, 2B) to the link member (103A, 103B, 103C, 3A, 3B) and a position of a working point (133) of the link member (103C) for applying a force to driving force transmitting member.

7. The operating mechanism according to claim 1, wherein the second axis (132B) is disposed on one side of a holding portion (150B) to be held by an operator and the first axis (121 B) is disposed on the other side of the holding portion (150B), and an effort point (130B) of the link member (103B) for receiving a force from the operating member (102B) is disposed between the second axis (132B) and the first axis (121 B).

8. The operating mechanism according to claim 1, wherein an engaging portion (133) of the link member (103C) to which the driving force transmitting member (111) is attached has a shape of a slot which is elongated in such a direction as to vary a distance from the second axis (132A) to a working point of the link member (103C) for applying a force to the driving force transmitting member (111).

9. The operating mechanism according to any one of claims 1 to 6, further comprising a holding means for holding an operating target in a predetermined state through an operation of the operating member.

10. The operating mechanism according to claim 9, wherein the holding means has an intermediate holding surface (29A) for holding, in an intermediate position, the operating member (2A) for holding the operating target in the predetermined state.

11. The operating mechanism according to any one of claims 1 to 6, wherein the operating member (2A) has a holding surface (28A) for holding the operating member in a position in which an operating target is to be held in a predetermined state in a place coming in contact with the link member (3A).

12. The operating mechanism according to any one of claims 1 to 6, wherein the operating member (2A, 2B) is pivotable in a first direction (A1, B1) and a second direction (A2, B2),
the operating member (2A, 2B) pivots around the first axis (23A, 21 B) when the operating member (2A, 2B) pivots in the first direction (A1, B1),
the operating member (2A, 2B) pivots around a sub axis (24A, 22B) when the operating member (2A, 2B) pivots in the second direction (A2, B2), and
the sub axis (24A, 22B) is disposed between the first axis (23A, 21B) and an end of the operating member (2A, 2B).

13. The operating mechanism according to claim 12, wherein the operating member (2A) includes, in a place coming in contact with the link member (3A), a holding surface (28A) for holding the operating member (2A) in a position in which an operating target is held in a predetermined state, and
the operating member (2A) moving in the second direction (A2) around the sub axis (24A) is held by the holding surface (28A).

14. The operating mechanism according to claim 12, wherein the operating member (2A) has an axis switching portion (21A) which is pivotally supported by the first axis (23A), and an operating portion (20A) which is pivotally supported by the axis switching portion (21A) through the sub axis (24A).

15. The operating mechanism according to claim 12, further comprising a first axis supporting portion (40B) for supporting the first axis (21B) and a second axis supporting portion (41 B) for supporting the sub axis (22B),
wherein the first axis supporting portion (40B) has a shape of a slot formed along a locus of the first axis (21B) around the sub axis (22B), and
wherein the second axis supporting portion (41 B) has a shape of a slot formed along a locus of the sub axis (22B) around the first axis (21 B).

16. An assistive equipment (6) comprising the operating mechanism (101A, 101B, 101C, 1A, 1B) according to any one of claims 1 to 15, and an operating target (91, 63) to be operated by the operating mechanism.

## FIG.1

## FIG.2(a)

## FIG.2(b)

# FIG.3

# FIG.4(a)

# FIG.4(b)

## FIG.5(a)

## FIG.5(b)

## FIG.6

## FIG.7

## FIG.8

## FIG.9

# FIG.10

## FIG.11

## FIG.12

## FIG.13(a)

## FIG.13(b)

## FIG.14

## FIG.15

# FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3292280 A
- US 5279179 A

- US 5279180 A
- JP 9267731 A